(19) Europäisches Patentamt
European Patent Office
Office européen des brevets

(11) EP 2 189 487 A1

(12) **EUROPEAN PATENT APPLICATION**
published in accordance with Art. 153(4) EPC

(43) Date of publication:
**26.05.2010 Bulletin 2010/21**

(21) Application number: **08827484.0**

(22) Date of filing: **06.08.2008**

(51) Int Cl.:
***C08G 75/23*** *(2006.01)*

(86) International application number:
**PCT/JP2008/064086**

(87) International publication number:
**WO 2009/022591 (19.02.2009 Gazette 2009/08)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.08.2007 JP 2007210384**
**28.02.2008 JP 2008047873**
**21.05.2008 JP 2008132940**

(71) Applicant: **Toray Industries, Inc.**
**Tokyo 103-8666 (JP)**

(72) Inventors:
- **KANOMATA, Akinori**
**Nagoya-shi**
**Aichi 455-8502 (JP)**
- **YAMAUCHI, Koji**
**Nagoya-shi**
**Aichi 455-8502 (JP)**
- **HORIUCHI, Shunsuke**
**Nagoya-shi**
**Aichi 455-8502 (JP)**
- **SAKATA,Hiroaki**
**Iyo-gun**
**Ehime 791-3193 (JP)**
- **HONDA, Shiro**
**Iyo-gun**
**Ehime 791-3193 (JP)**
- **ASANO, Itaru**
**Nagoya-shi**
**Aichi 455-8502 (JP)**

(74) Representative: **Webster, Jeremy Mark et al**
**Mewburn Ellis LLP**
**33 Gutter Lane**
**London**
**EC2V 8AS (GB)**

# (54) AROMATIC POLYETHER SULFONE HAVING HYDROXYPHENYL END GROUP AND METHOD FOR PRODUCING THE SAME

(57) This invention is a method for producing an aromatic polyethersulfone (PES) having hydroxyphenyl end groups suitable as an alloying agent, comprising the step of heating an aromatic polyester sulfone obtained beforehand by polymerization and a dihydric phenol compound and/or water and a basic compound in an aprotic polar solvent. According to this method, a PES having reactive hydroxyphenyl end groups, which can be suitably finely dispersed into a matrix resin when a thermoplastic resin or thermosetting resin and the PES are alloyed with each other, can be produced efficiently in a short time by an economical and simple method.

Figure 3

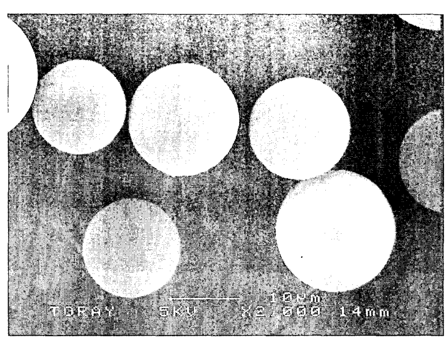

EP 2 189 487 A1

## Description

[Technical field]

The present invention relates to an aromatic polyethersulfone having hydroxyphenyl end groups (hereinafter abbreviated as a PES) difficult to produce by conventional production methods, and also relates to a production method thereof. In more detail, this invention relates to a highly pure PES with a high hydroxyphenyl end group content, which is excellent in the effect of compatibilization when alloyed with a thermoplastic resin or thermosetting resin, and also relates to a method for efficiently producing said polymer by an economical and simple method.

[Background art]

PESs are excellent in heat resistance, mechanical properties, electric properties, flame retardancy, chemicals resistance, hydrolysis resistance, radiation resistance, low dielectric properties and moldability, and therefore are injection-molded for extensive use as electric and electronic parts, for example, circuit boards, support plates for discs such as optical discs and magnetic discs, electrically insulating protection films, integrated circuit interlayer insulation films and integrated circuit board materials, automobile parts, aircraft parts, medical instrument parts, etc.

Further, owing to the abovementioned excellent properties, PESs are widely used also as modifiers to be mixed with thermoplastic resins and thermosetting resins, for enhancing the performance of the thermoplastic resins and thermosetting resins.

Known methods for alloying a PES include, for example, (1) a method of melt-kneading a thermoplastic resin and a PES, (2) a method of alloying a thermoplastic resin and a PES in a solvent, and (3) a method of dissolving a PES into the prepolymer of a thermosetting resin in a solvent or in the absence of a solvent, and subsequently curing for alloying.

(1) For obtaining a thermoplastic resin alloy, disclosed is a method of alloying a PES with a polycarbonate at a specific ratio and controlling the morphology, for enhancing the chemicals resistance of the polycarbonate and also enhancing the moldability of the PES (Patent Document 1).
(2) As an example of alloying a thermoplastic resin and a PES in a solvent, disclosed is a method of alloying a PES with a polyamideimide resin in an NMP solution, for enhancing the flexibility and impact resistance of the polyamideimide resin (Patent Document 2).
(3) As examples of dissolving a PES into the prepolymer of a thermosetting resin and curing for alloying, disclosed are a method of alloying a PES with a thermosetting resin such as an epoxy resin or maleimide resin, for enhancing toughness, and a method of alloying a PES with a thermosetting resin such as an epoxy resin or acrylic resin used as a heat sensitive resin or a wiring board material, for maintaining the properties peculiar to the thermosetting resin functioning as a matrix and for enhancing mechanical properties (Patent Documents 3 and 4).

For enhancing the quality of a resin composition by alloying, it is necessary to make the phase separated structure consisting of the respective polymer components finer, and the aforementioned techniques (1) to (3) can make the PES only coarsely dispersed in the matrix resin. To achieve higher quality by alloying, a technique of achieving finer dispersion is necessary.

Known methods for enhancing the dispersibility of polymers include a general method of using a compatibilizing agent, and a method of combining alloy components at the level of molecules by a chemical reaction for enhancing dispersibility, and further compatibilizing. These findings are reviewed, for example, in the Introduction of "Polymer Alloy: Kiso to Ohyoh (= Foundations and Applications of Polymer Alloys" edited by The Society of Polymer Science, Japan and published by KK Tokyo Kagaku Dojin.

Patent Document 5 discloses a method in which for more finely dispersing a PES into a thermosetting resin matrix by the abovementioned method (3), a polyfunctional epoxy resin is used as the raw material of the thermosetting resin matrix, while functional groups capable of reacting with epoxy groups, for example, hydroxyphenyl end groups are introduced into the polymer ends of the PES, for promoting the reaction between the polymers in order to finely disperse the PES into the thermosetting resin matrix. Further, it is disclosed that a fiber-reinforced composite material comprising the epoxy resin composition obtained by using this technique has the PES finely dispersed in the matrix resin, and moreover that the material is excellent in stiffness (for example, compressive strength) and toughness (for example, post-impact compressive strength).

Similarly, Patent Documents 6 and 7 respectively disclose that amino-phenyl ends are introduced as functional groups capable of reacting with an epoxy into the polymer ends of a PES, to exhibit similar effects. Further, Patent Documents 8, 9 and 10 respectively disclose that for alloying, a PES provided as particles with a small particle size is used to cause a homogeneous reaction between the hydroxyphenyl end groups of the PES and the matrix resin, for effectively achieving fine dispersion at the time of alloying and shortening the kneading time, etc.

Further, as methods for producing aromatic polyethersulfone particles, a mechanical pulverization method, chemical particle evolution method, and the like are disclosed.

Patent Document 8 discloses a method for obtaining particles with a size of tens of micrometers from a commercially available PES using a pulverizer, as a mechanical pulverization method. Patent Document 9 discloses a method comprising the steps of dissolving a commercially available PES into N-methyl-2-pyrrolidone (NMP), adding ethanol, and adding the solution into pure water with octylphenoxy polyethoxy ethanol dissolved therein, to obtain an aqueous dispersion of particles with a particle size of 1 $\mu$m or less, as a chemical particle evolution method. Further, Patent Document 10 also discloses a particle evolution method by drying in a liquid.

In general, it is known that a PES can be obtained by a polycondensation reaction between a dihalogenodiphenyl sulfone compound and a dihydric phenol compound in an organic polar solvent in the presence of an alkali metal compound, or by synthesizing an alkali metal disalt of a dihydric phenol compound beforehand and performing a polycondensation reaction with a dihalogenodiphenyl compound (Patent Documents 11, 12 and 13).

In an ordinary polycondensation reaction, for obtaining a high molecular weight, usually a dihalogenodiphenyl compound is used by an amount equimolar to the amount of a dihydric phenol compound, and in this case, theoretically, one of the polymer ends becomes a hydroxyphenyl end group, and the other end becomes a halogenophenyl end group. However, the PES obtained by a conventional polymerization technique has a high melt viscosity, and compared with engineering plastics that allow ordinary extrusion and injection molding, the PES has a problem in view of processability. That is, since the PES is a material with a high glass transition temperature, melt processing at a high temperature is required, and it is known that in the state of melt processing, the melt viscosity increases. The reason is considered to be that the ends of the PES obtained by the conventional polymerization technique contain highly active hydroxyphenyl end groups, and that the groups react with the halogenophenyl end groups under heating, or that the hydroxyphenyl end groups are deteriorated by heating or oxidation.

Therefore, as a method for decreasing the hydroxyphenyl end groups of the PEC, to enhance melt stability, for example, Patent Documents 14 and 15 respectively disclose a method comprising the steps of obtaining a PES by polymerization from a dihydric phenol compound, alkali metal salt and dihalogenodiphenyl sulfone, and subsequently letting chloromethane react for sealing the reaction-active hydroxyphenyl end groups. Patent Document 16 discloses a method comprising the steps of using a dihalogenodiphenyl sulfone more excessively than a dihydric phenol compound for polymerization, and adding a monohydric phenol compound by an amount equivalent to or more than the amount of the excessive portion of the halogenophenyl ends, to seal the ends, for thereby introducing reaction-inactive phenyl groups, to enhance meltability.

Further, Patent Document 17 discloses also a method of using 1, 3-dimethyl-2-imidazolidinone as a polymerization solvent with an intention to enhance the melt stability of polymers by inhibiting a side reaction at the time of polymerization.

As described above, various contrivances have been made for enhancing the melt processability of PESs, and among them, it is preferred to decrease or seal the hydroxyphenyl end groups causing melt processability to decline, for introducing reaction-inactive halogenophenyl ends. However, in the case where a PES is used as a modifier to be alloyed with a thermoplastic resin or thermosetting resin, a PES with reaction-active hydroxyphenyl end groups is considered to be preferred since the reaction with the thermoplastic resin or thermosetting resin can be promoted, though this method has not only a problem in the production of the polymer per se but also a problem that the melt processability at the time of alloying is poor. In the case where a PES with reaction-inactive halogenophenyl ends excellent in view of polymer production and melt processability is used as an alloying agent, there is a problem that the PES is not dispersed into the thermoplastic resin or thermosetting resin, but is coarsely dispersed as described in the aforementioned Patent Documents 1 to 3.

On the other hand, Patent Document 5 does not describe the detail of the method for producing a PES having hydroxyphenyl end groups, but a publicly known ordinary method is used, that is, polycondensation using a dihydric phenol compound and a dihalogenodiphenyl sulfone as raw materials is used for production. In the publicly known ordinary polycondensation, in view of polycondensation theory, if a dihydric phenol compound is used excessively compared with a dihalogenodiphenyl sulfone, or if a dihydric phenol compound is added by an amount equivalent to or more than the amount of halogenophenyl ends at the time of terminating the polymerization, reaction-active hydroxyphenyl end groups can be introduced by an amount equivalent to or more than the amount of halogenophenyl end groups (theoretically, if a dihalogenodiphenyl sulfone and a dihydric phenol compound are supplied by equal amounts of 1 : 1, the highest molecular weight can be achieved, and the end group ratio in this case is halogenophenyl end groups : hydrophenyl end groups = 50 : 50 (mol%)). However, even in the case where the supplied amounts of both the compounds are equal to each other at 1 : 1, the alkali metal phenoxide and the alkali metal salt of the dihydric phenol compound, etc. as the growing ends during polymerization are easily oxidized during polymerization depending on polymerization conditions, to raise the problem that coloration occurs during polymerization, the problem that the oxidation reaction during polymerization destroys the balance between supplied moles and the balance between growing end groups, making it difficult to achieve a high molecular weight, the problem that the amount of halogenophenyl end groups

becomes larger than the amount of hydroxyphenyl end groups, and so on, thus raising the problem that the oxidation reaction disturbs the ideal polycondensation reaction, making the control of molecular weight and the quantity control of hydroxy end groups difficult. Furthermore, in the case where the dihydric phenol compound is positively used by an excess amount for increasing the amount of reactive hydroxyphenol end groups, the balance between the moles of two component monomers is destroyed as is known from the polycondensation theory, and though the amount of end groups can be slightly increased, there occurs a problem that the molecular weight of the polymer remarkably declines simultaneously. That is, there is an essential problem of a polycondensation method that the increase in the amount of hydroxyphenyl end groups and the increase in the molecular weight of the polymer take place simultaneously.

Further, in reference to the method disclosed in Patent Document 16 (especially page 4, line 18 and after), the present inventors discussed the method of adding a dihydric phenol compound when polymerization is terminated, to seal the ends by the dihydric phenyl compound. However, in this case, the polymerization of the chlorophenyl ends in the polymer and the dihydric phenol compound took place, and the intended high hydroxyphenyl end rate could not be achieved. Rather, there was a problem that the decomposition and coloration caused by the oxidation reaction due to the post addition of the dihydric phenol compound took place.

Furthermore, in the case where the dihydric phenol compound was used positively in an excess amount before initiation of polymerization and at the time of terminating the polymerization as described before, the excessively added acidic dihydric phenol compound, the alkali metal salt of the dihydric phenol compound and the alkali metal salt per se remain in the obtained PES polymer, to raise the problem that the polymer declined in thermal stability and retention stability, and the problem that the interaction with the hydroxyphenyl end groups made refining and removal more difficult. Usually, after completion of polymerization reaction of a PES, the polymerization reaction solution is thrown into a poor solvent capable of precipitating the PES, and as the case may be, acid treatment is performed to precipitate a white solid. Cleaning such as washing or filtration is performed or without performing filtration, etc., the polymer powder is recovered. However, if the amount of hydroxyphenyl end groups is increased to simultaneously lower the molecular weight of the polymer, it is difficult to recover as a powder unlike a high molecular weight PES. As the case may be, the PES is softened in the poor solvent, to raise the problem that the polymer is recovered in the state of a lump. As described here, since the recovery as a powder in the step of precipitating the polymer in the poor solvent is difficult, the acidic dihydric phenol compound added excessively for increasing hydroxyphenyl end groups, the alkali metal salt of the dihydric phenol compound and the alkali metal salt per se must be reprecipitated and refined or the unreactive monomer must be removed to raise the problem that productivity remarkably declines, and further there is a problem that the alkali metal salt remains in the PES having hydroxyphenyl end groups. If such a PES is alloyed with a thermoplastic resin or thermosetting resin, there arises a problem that thermal decomposition or alloying accelerates coloration and hydrolysis depending on the thermoplastic resin or epoxy resin used, to lower the retention stability and to remarkably lower electric properties. If the PES is desired to be used as a modifier to be alloyed, the purity of it must be further enhanced.

On the other hand, Patent Document 6 (page 12, upper right column, line 15) and Patent Document 7 (page 10, upper right column, line 10) respectively disclose that a PES into which amino end groups higher in the reactivity with an epoxy than hydroxyphenyl end groups are introduced is used to obtain the same effects as those of the aforementioned Patent Document 5. The Patent Document 6 discloses that the PES into which amino groups are introduced can be obtained by the polycondensation between a dihalogenodiphenyl sulfone and a potassium metal salt of a dihydric phenol compound and by a subsequent reaction with the potassium salt of an aminophenol compound. However, the methods of both the Patent Documents 6 and 7 have the same problems as those of the aforementioned publicly known example of a PES having hydroxyphenyl end groups, and moreover, an aminophenol compound and metal salts thereof have chemical properties that they are more likely to be thermally decomposed and oxidatively decomposed than a dihydric phenol compound and metal salts thereof. Further, in the case where an aminophenol compound is used for sealing the ends, both the amino groups and the hydroxyphenyl groups react with the growing ends of the polymer. Therefore, the control of end groups and the control of molecular weight become difficult, and there arises a problem that the efficiency of refining and post-treatment also declines. Furthermore, there is a problem that the obtained PES becomes poorer in thermal stability, retention stability and hydrolysis resistance, and in addition, since both aminophenyl ends and hydroxyphenyl ends different in reactivity exist, it is difficult to promote a homogeneous reaction at the time of alloying with a thermoplastic resin or thermosetting resin, to raise the problem that homogeneous dispersibility is difficult.

Further, as a method for producing fine particles from the PES obtained as described above, Patent Document 8 discloses a method of obtaining particles with a size of tens of micrometers by mechanically pulverizing a commercially available PES using a pulverizer. The method has a problem that if the particle size is smaller than 50 μm, the time and cost required for pulverization increase extremely to lower the productivity. Furthermore, the particle size distribution is not wide either.

Patent Document 9 discloses a chemical particle evolution method comprising the steps of dissolving a commercially available PES into N-methyl-2-pyrrolidone (NMP), adding an ethanol, and adding the obtained solution into pure water with octylphenoxy polyethoxy ethanol dissolved therein, to obtain an aqueous dispersion of particles with a

particle size of 1 μm or less. However, the method has a problem that the many solvents used complicate the process.

Further, Patent Document 10 discloses a particle evolution method by drying in a liquid. However, the examples of the document do not describe any particular method, and it is difficult to determine whether the method is realistic. In general, the method of drying in a liquid has a problem that productivity is low for such reasons that the process is complicated and that the removal of the solvent is costly.

As described above, the conventional techniques for producing particles from a PES are low in productivity and unsatisfactory for such reasons that the cost is high and that the various solvents used complicate the process.

[Patent Document 1] JP 7-11134 A (claim 1)
[Patent Document 2] JP 6-228438 A (claim 1)
[Patent Document 3] JP 6-157906 A (claim 1)
[Patent Document 4] JP 2001-106921 A (claim 8)
[Patent Document 5] JP 2005-105151 A (claim 1)
[Patent Document 6] JP 1-118565 A (claims 1 and 5)
[Patent Document 7] JP 2-58569 A (claim 12)
[Patent Document 8] JP 2007-231234 A (claim 1)
[Patent Document 9] JP 2000-80329 A (claim 1)
[Patent Document 10] JP 4-325590 A (claim 1)
[Patent Document 11] JP 42-7799 B (claim 1)
[Patent Document 12] JP 45-21318 B (claim 1)
[Patent Document 13] JP 48-19700 A (claim 1)
[Patent Document 14] JP 53-12991 A (claim 1)
[Patent Document 15] JP 53-16098 A (claim 1)
[Patent Document 16] JP 5-163352 A (claim 1)
[Patent Document 17] JP 5-86186 A (claim 1)

Among the abovementioned patent documents, Patent Documents 1-7 are publicly known documents concerning alloys consisting of PESs and thermoplastic resins or thermosetting resins, and Patent Documents 8 to 10 are publicly known documents concerning the production of particles from PESs. Patent Documents 11-17 are publicly known documents concerning the production of PESs.

[Disclosure of the invention]

[Problems to be solved by the invention]

The present invention is intended to solve the problems of the abovementioned prior art by providing an economical and simple method of efficiently producing, in a short time, a highly pure PES having reactive hydroxyphenyl end groups, which can be finely dispersed, particularly in nano sizes, in a matrix resin when an alloy consisting of the PES and a thermoplastic resin or thermosetting resin is produced.

[Means for solving the problems]

To solve the abovementioned problems, this invention provides the following:

(1) A method for producing an aromatic polyethersulfone having hydroxyphenyl end groups (E) comprising the step of heating an aromatic polyethersulfone (A) with a structure represented by the following general formula (a-1) and/or the following general formula (a-2), a dihydric phenol compound (B) represented by the following general formula (b-1) and/or (b-2) and/or water (C) and a basic compound (D) in an aprotic polar solvent:

[Chemical formulae 1]

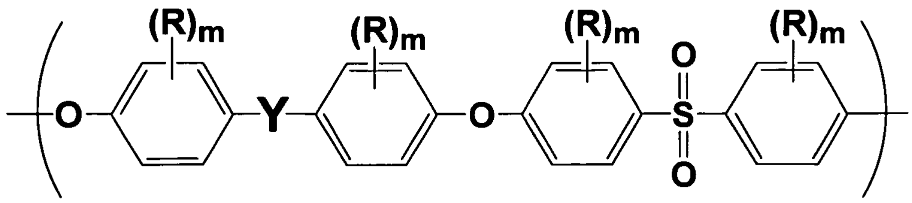

(a-1)

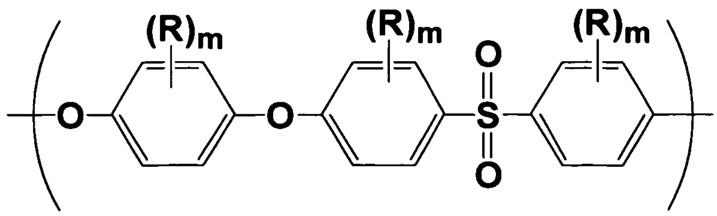

(a-2)

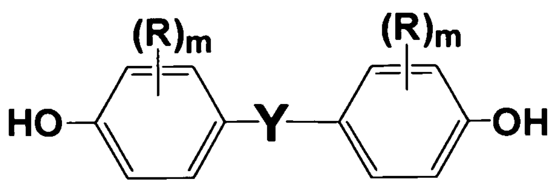

(b-1)

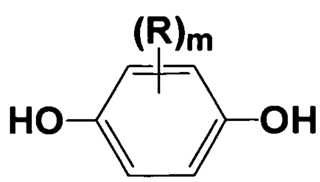

(b-2)

where each R, which may be either the same as or different from other R's denotes, respectively independently, any one selected from alkyl groups with 1 to 6 carbon atoms and aryl groups with 6 to 8 carbon atoms; m denotes an integer of 0 to 3; Y denotes any one selected from direct bond, O, S, $SO_2$, CO, $C(CH_3)_2$, $CH(CH_3)$ and $CH_2$.

(2) A method for producing an aromatic polyethersulfone having hydroxyphenyl end groups (E) comprising the step (I) of heating an aromatic polyethersulfone (A), a dihydric phenol compound (B) and/or water (C) and a basic compound (D) in an aprotic polar solvent, the step (II) of mixing the solution obtained in the step (I) and a surfactant, to obtain a homogeneous solution or suspension, and the step (III) of adding a second solvent different from the aprotic polar solvent to the homogeneous solution or suspension obtained in the step (II), to precipitate aromatic polyethersulfone particles.

(3) A method for producing an aromatic polyethersulfone having hydroxyphenyl end groups (E), according to said (1) or (2), wherein the added amount of the dihydric phenol compound (B) is 0.01 to 0.5 mole per 1 mole of the aromatic polyethersulfone (A).

(4) A method for producing an aromatic polyethersulfone having hydroxyphenyl end groups (E), according to any one of said (1) through (3), wherein the added amount of water (C) is 0.1 to 30 moles per 1 mole of the aromatic polyethersulfone (A).

(5) A method for producing an aromatic polyethersulfone having hydroxyphenyl end groups (E), according to any one of said (1) through (4), wherein the basic compound (D) is at least one selected from sodium carbonate, potassium carbonate, anhydrous sodium carbonate and anhydrous potassium carbonate.

(6) A method for producing an aromatic polyethersulfone having hydroxyphenyl end groups (E), according to any one of said (1) through (5), wherein the aprotic polar solvent is at least one selected from N-methylpyrrolidone, N, N-dimethylformamide, N,N-dimethylacetamide, 1,3-dimethyl-2-imidazolidinone, dimethyl sulfoxide and sulfolane.

(7) A method for producing an aromatic polyethersulfone having hydroxyphenyl end groups (E), according to any one of said (1) through (6), wherein the heating temperature is 100 to 200˚C.

(8) A method for producing an aromatic polyethersulfone having hydroxyphenyl end groups (E), according to any one of said (1) through (7), wherein the aromatic polyethersulfone (E) obtained by heating the aromatic polyethersulfone (A), the dihydric phenol compound (B) and/or water (C) and the basic compound (D) in an aprotic polar solvent, and an acid are brought into contact with each other.

(9) A method for producing an aromatic polyethersulfone having hydroxyphenyl end groups (E), according to any one of said (2) through (8), wherein the surfactant is at least one or a mixture consisting of two or more selected from perfectly saponified or partially saponified polyvinyl alcohol, perfectly saponified or partially saponified poly (vinyl alcohol-ethylene) copolymer, polyethylene glycol and polyvinylpyrrolidone.

(10) A method for producing an aromatic polyethersulfone having hydroxyphenyl end groups (E), according to any one of said (2) through (9), wherein the added amount of the surfactant is 1 to 200 parts by mass per 100 parts by mass of the aromatic polyethersulfone (A).

(11) A method for producing an aromatic polyethersulfone having hydroxyphenyl end groups (E), according to any one of said (2) through (10), wherein the second solvent is such that the solubility of the aromatic polyethersulfone (A) in the second solvent at 25˚C is 1 mass% or less.

(12) A method for producing an aromatic polyethersulfone having hydroxyphenyl end groups (E), according to any one of said (2) through (11), wherein the second solvent is at least one or a mixture consisting of two or more selected from water, methanol and ethanol.

(13) A method for producing an aromatic polyethersulfone having hydroxyphenyl end groups (E), according to any one of said (1) through (12), wherein the hydroxyphenyl end group rate of the aromatic polyethersulfone (A) used as the raw material is 50 mol% or less (measured by $^1$H-NMR in dimethyl sulfoxide-d6 and calculated from [Peak area at 6.9 ppm (hydroxylphenyl end group)]/[Peak area at 6.9 ppm (attributable to hydroxyphenyl end group) + Peak area at 7.7 ppm (attributable to chlorophenyl end group)] × 100).

(14) A method for producing an aromatic polyethersulfone having hydroxyphenyl end groups (E), according to any one of said (1) through (13), wherein the hydroxyphenyl end group rate of the obtained aromatic polyethersulfone having hydroxyphenyl end groups (E) is 60 mol% or more (measured by $^1$H-NMR in dimethyl sulfoxide-d6 and calculated from [Peak area at 6.9 ppm (hydroxylphenyl end group)]/[Peak area at 6.9 ppm (attributable to hydroxyphenyl end group) + Peak area at 7.7 ppm (attributable to chlorophenyl end group)] × 100).

(15) A method for producing an aromatic polyethersulfone having hydroxyphenyl end groups (E), according to any one of said (1) through (14), wherein the reduced viscosity of the obtained aromatic polyethersulfone having hydroxyphenyl end groups (E) measured in DMF at 25˚C and 1 g/dl is 0.2 to 0.4.

(16) A method for producing an aromatic polyethersulfone having hydroxyphenyl end groups (E), according to said (14), wherein the hydroxyphenyl end group rate of the obtained aromatic polyethersulfone having hydroxyphenyl end groups (E) is 80 mol% or more (measured by $^1$H-NMR in dimethyl sulfoxide-d6 and calculated from [Peak area at 6.9 ppm (hydroxylphenyl end group)]/[Peak area at 6.9 ppm (attributable to hydroxyphenyl end group) + Peak area at 7.7 ppm (attributable to chlorophenyl end group)] × 100).

(17) A method for producing an aromatic polyethersulfone resin composition comprising the steps of kneading 1 to 100 parts by mass of the aromatic polyethersulfone having hydroxyphenyl end groups (E) as set forth in any one of said (1) through (16) with 100 parts by mass of an epoxy resin and heating the mixture at 100˚C to 200˚C for curing.

(18) An aromatic polyethersulfone having hydroxyphenyl end groups represented by the following chemical structural formula (a-3) and having a hydroxyphenyl end group rate of 60 mol% or more (measured by $^1$H-NMR in dimethyl sulfoxide-d6 and calculated from [Peak area at 6.9 ppm (hydroxylphenyl end group)]/[Peak area at 6.9 ppm (attributable to hydroxyphenyl end group) + Peak area at 7.7 ppm (attributable to chlorophenyl end group)] × 100) and a reduced viscosity of 0.2 to 0.4 as measured in DMF at 25˚C and 1 g/dl.

[Chemical formula 2]

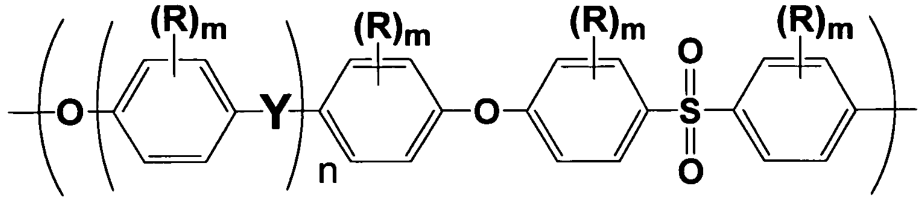

(a-3)

where each R, which may be either the same as or different from other R's denotes, respectively independently, any one selected from alkyl groups with 1 to 6 carbon atoms and aryl groups with 6 to 8 carbon atoms; n denotes an integer of 0 to 1; m denotes an integer of 0 to 3; Y denotes any one selected from direct bond, O, S, $SO_2$, CO, $C(CH_3)_2$, $CH(CH_3)$ and $CH_2$.

(19) Particles of an aromatic polyethersulfone having hydroxyphenyl end groups with an average particle size of 0.1 to 50 μm, obtained from the aromatic polyethersulfone having hydroxyphenyl end groups (E) as set forth in said (18).

(20) Particles of an aromatic polyethersulfone having hydroxyphenyl end groups as set forth in said (19), wherein the particle size distribution is 1.0 to 1.5.

[Effects of the invention]

This invention can provide an economical and simple method for efficiently producing, in a short time, a PES having reactive hydroxyphenyl end groups, which can be suitably finely dispersed in a matrix resin when an alloy consisting of the PES and a thermoplastic resin or thermoplastic resin is produced.

[Brief description of the drawings]

[Fig. 1] is NMR charts of the PES obtained in Reference Example 1 and the PES obtained in Working Example 21.
[Fig. 2] is NMR charts of the PES obtained in Reference Example 1 and the PES obtained in Working Example 48.
[Fig. 3] is a transmission electron microscope photo showing the PES particles obtained in Working Example 58.
[Fig. 4] is a transmission electron microscope photo showing a cross section of the epoxy resin composition obtained in Comparative Example 14.
[Fig. 5] is a transmission electron microscope photo showing a cross section of the epoxy resin composition obtained in Working Example 71.
[Fig. 6] is a transmission electron microscope photo showing a cross section of the epoxy resin composition obtained in Working example 70.
[Fig. 7] is a transmission electron microscope photo showing a cross section of the epoxy resin composition obtained in Working example 75.
[Fig. 8] is a transmission electron microscope photo showing a cross section of the epoxy resin composition obtained in Working example 74.

[Meanings of symbols]

a: Protons adjacent to the aromatic carbon substituted by a hydroxyl group
b: Protons adjacent to the aromatic carbon substituted by chlorine

[The best modes for carrying out the invention]

Modes for carrying out this invention are explained below.

(1) Aromatic polyethersulfone (A) (hereinafter abbreviated as PES (A))

The PES (A) used in this invention has a structure represented by the following general formula (a-1) and/or

the following general formula (a-2), where each R, which may be either the same as or different from other R's denotes, respectively independently, any one selected from alkyl groups with 1 to 6 carbon atoms and aryl groups with 6 to 8 carbon atoms; m denotes an integer of 0 to 3; Y denotes any one selected from direct bond, O, S, $SO_2$, CO, $C(CH_3)_2$, CH ($CH_3$) and $CH_2$.

[Chemical formulae 3]

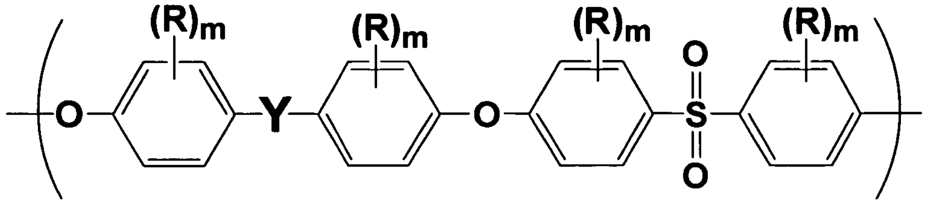

(a-1)

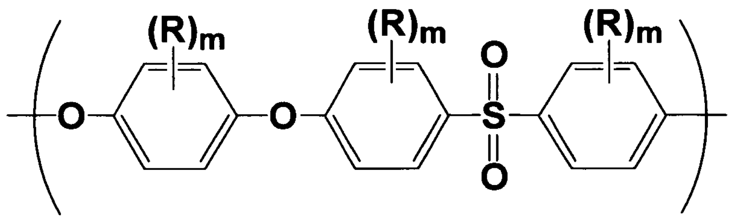

(a-2)

Such a PES (A) can be produced by a publicly known ordinary method and can be produced, for example, by any of the methods described in the aforementioned Patent Documents 11 through 17.

For example, it can be produced by polycondensing a dihalogenodiphenyl compound represented by the following general formula (I) and a dihydric phenol compound represented by the following general formula (II-1) and/or (II-2) in an organic solvent in the presence of an alkali metal compound or polycondensing a dihalogenodiphenyl compound, a dihydric phenol compound represented by the general formula (II-1) and/or (II-2) prepared beforehand and an alkali metal compound.

[Chemical formulae 4]

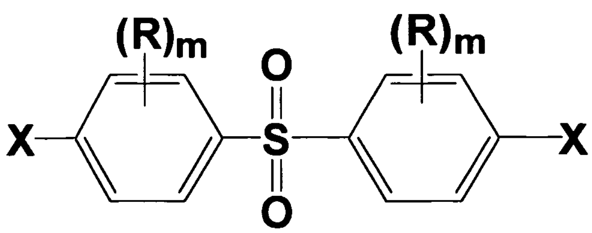

(I)

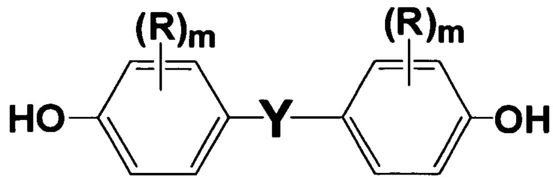

(H1)

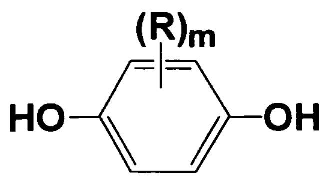

(H2)

(where X denotes Cl or F; each R, which may be either the same as or different from other R's denotes, respectively independently, any one selected from alkyl groups with 1 to 6 carbon atoms and aryl groups with 6 to 8 carbon atoms; m denotes an integer of 0 to 3; Y denotes any one selected from direct bond, O, S, $SO_2$ CO, $C(CH_3)_2$, $CH(CH_3)$ and $CH_2$.)

The dihalogenodiphenyl compound is usually used by an amount equimolar to the amount of the dihydric phenol compound. For finely adjusting the molecular weight and the end group ratio, the amount of the dihydric phenol compound can also be slightly larger or smaller than the equimolar amount. Further, for adjusting the molecular weight or end group ratio, a small amount of a monohalogeno-diphenyl compound or monohydric phenol compound can also be added to the polymerization solution.

It is preferred to perform the polycondensation at a reaction temperature of usually 140 to 340˚C, though depending on the properties of the solvent used. If the polycondensation is performed at a temperature higher than 340˚C, the decomposition reaction of the produced polymer takes place, and therefore, there is a tendency that a high molecular weight PES or a highly pure PES is unlikely to be obtained. If the polycondensation is performed at a temperature lower than 140˚C, there is a tendency that a high molecular weight PES is unlikely to be obtained.

The reaction time greatly varies depending on the raw materials used in the reaction, polymerization reaction type and reaction temperature. Usually the reaction time is in a range from 10 minutes to 100 hours, and a preferred range is from 30 minutes to 24 hours. As the reaction atmosphere, it is preferred that no oxygen exists, and it is preferred to perform the reaction in nitrogen or another inert gas. An alkali metal salt of a dihydric phenol compound is likely to be oxidized if it is heated in the presence of oxygen, to prevent the intended polymerization reaction, making it difficult to achieve a high molecular weight and also causing the coloration of the polymer.

Further, in the polycondensation reaction, if an appropriate end-terminating agent for a polymer, for example, a monofunctional chloride or polyfunctional chloride such as methyl chloride, t-butyl chloride or 4,4'-dichlorodiphenylsulfone is added to the reaction solution and a reaction is performed, for example, at 90 to 150˚C, when the polymerization is terminated, then the ends can be sealed.

Examples of the organic solvent used in this case include sulfoxide solvents such as dimethyl sulfoxide and hexamethylene sulfoxide, amide solvents such as N,N-dimethylformamide and N,N-dimethylacetamide, piperidone solvents such as N-methyl-2-pyrrolidone and N-methyl-2-piperidone, 2-imidazolinone solvents such as 1,3-dimethyl-2-imidazolidinone, diphenyl compounds such as diphenyl ether and diphenyl sulfone, halogen solvents such as methylene chloride, chloroform, dichloroethane, tetrachloroethane and trichloroethylene, lactone solvents such as $\gamma$-butyrolactone, sulfolane solvents such as sulfolane, a mixture consisting of two or more of the foregoing, etc.

Further, a slight amount of water such as water coming from outside during the reaction or water generated during the polymerization inhibits the progress of polymerization. Therefore, for the purpose of separating the water in the reaction system, a solvent compatible with an aprotic polar solvent and capable of forming an azeotropic mixture with water at 0.101 MPa can be used.

The solvent is not especially limited, but examples of the solvent include hydrocarbon solvents such as pentane, hexane, heptane, octane, cyclohexane, dodecane, benzene, toluene, xylene, naphthalene and ethylbenzene, ether solvents such as diisopropyl ether, ethyl butyl ether and dioxane, ketone solvents such as acetyl acetone and methyl ethyl ketone, alcohol solvents such as ethanol, isopropanol, n-propanol, isobutyl alcohol, hexanol and benzyl alcohol, ester solvents such as ethyl acetate, methyl acetate, butyl acetate, butyl butyrate and methyl benzoate, carboxylic acid solvents such as formic acid, acetic acid, propionic acid, valeric acid and benzoic acid, halogen solvents such as chloroform, bromoform, 1,2-dichloromethane, 1,2-dichloroethane, carbon tetrachloride, chlorobenzene and hexafluoroisopropanol, amine solvents such as ethylenediamine, aniline, pyridine and methylpyridine, etc. It is preferred to use a hydrocarbon. It is more preferred to use at least one selected from benzene, toluene and xylene.

The used amount of the water azeotrope solvent is not especially limited, if the amount allows the water in the

reaction system to be removed. However, it is preferred that the amount is in a range from 0.01 to 10 times the weight of all the monomers. A more preferred range is 0.02 to 5 times.

Examples of the alkali metal compound include alkali metal carbonates, alkali metal hydroxides, alkali metal hydrides, alkali metal alkoxides, etc. Among them, alkali metal carbonates such as potassium carbonate and sodium carbonate are preferred. Above all, anhydrous alkali metal salts such as anhydride potassium carbonate and anhydrous sodium carbonate are preferred.

If a crude PES is obtained by polycondensation, it can be separated as a precipitated solid by adding a poor solvent of the PES to the reaction solution or adding the reaction solution to a poor solvent after separating the alkali metal compound contained in the reaction solution through filtration or centrifugation or without performing filtration or centrifugation for separation. Examples of the poor solvent of the PES include alcohols such as methanol, ethanol, isopropanol and butanol, nitriles such as acetonitrile, water, etc. Two or more of the poor solvents can also be used as a mixture. Further, the poor solvent may contain a good solvent of the polymer such as any one of the aforementioned polymerization reaction solvents, to such an extent that the polymer can be precipitated.

The precipitated solid is washed with the poor solvent and dried to obtain a PES powder.

The PES (A) used in this invention can be produced by the aforementioned method. However, in order to efficiently produce the PES having hydroxyphenyl end groups (E) to be finally obtained at high purity, it is preferred that the reduced viscosity of the PES (A) measured in DMF at 25˚C and 1 g/dl is 0.25 to 1.0. A more preferred range is 0.35 to 0.8, and a further more preferred range is 0.4 to 0.6.

If the reduced viscosity is replaced by the number average molecular weight (Mn) calculated using gel permeation chromatography (GPC), with DMF as a solvent and polystyrene as a standard, it is preferred that the number average molecular weight is 33, 000 to 140,000. A more preferred range is 47, 000 to 110,000, and a further more preferred range is 54,000 to 80,000.

If the reduced viscosity of the PES (A) used in the production method of this invention is low (if the number average molecular weight is low), the molecular weight of the finally obtained PES containing hydroxyphenyl groups (E) becomes very small, and the polymer portions with low molecular weights and oligomer are dissolved into the poor solvent or swollen. As a result, the polymer recovery rate and washing efficiency tend to decline. Further, owing to low washing efficiency, the amount of impurities such as the alkali metal compound in the polymer tends to increase. Further, if the molecular weight is lower, the glass transition temperature declines, and the heat resistance as a feature peculiar to the PES may decline as the case may be.

If the reduced viscosity of the PES (A) is high (if the number average molecular weight is high), the added amounts of the dihydric phenol compound (B) and/or water (C) and the basic compound (D) must be increased in order to obtain the hydroxyphenyl group-containing PES (E) with the molecular weight kept in a preferred range. Therefore, the solubility of the PES (A) declines, and the acidic unreactive dihydric phenol compound (B) and the basic compound (D) remain in the polymer, the polymer being colored. Thus, there remains a tendency that washing, recovery and separation are difficult.

Further, as for the end group ratio of the PES (A) used in the production method of this invention, in view of the productivity of the PES (A) and the efficiency in the production of the PES having reactive hydroxyphenyl end groups (E), it is preferred to use a PES containing relatively more chlorophenyl end groups than hydroxyphenyl end groups. More particularly, in the method of this invention in which the PES (A) used as the raw material reacts with the dihydric phenol compound, for introducing hydroxyphenyl end groups, it is preferred that the hydroxyphenyl end group rate in the PES (A) is 0 to 50 mol% in view of the efficiency of introducing hydroxyphenyl end groups and in view of the post processing efficiency after reaction. A more preferred range is 0 to 30 mol%, and a further more preferred range is 0 to 10 mol%.

Such a PES (A) can be produced by a publicly known method as described before. However, commercially available PESs produced by the aforementioned methods (for example, "Ultrason E" series produced by BASF and "Sumika Excel" series produced by Sumitomo Chemical Co., Ltd.) can be used. Among them, preferred are Sumika Excel 3600P, 4100P, 4800P, 5003P and 5200P, and more preferred are equivalents to Sumika Excel 3600P, 4100P and 4800P.

(2) Method for producing a PES having reactive hydroxyphenyl end groups (E) (step I)

The PES having reactive hydroxyphenyl end groups (E) of this invention is not produced by a publicly known ordinary method such as polycondensing a dihalogenodiphenyl compound to a dihydric phenol compound for direction production or further adding an end-sealing agent in the latter half of the polycondensation. The PES having reactive hydroxyphenyl end groups (E) is produced by heating a high molecular weight PES (A) as the raw material, a dihydric phenol compound (B) and/or water (C) and a basic compound (D) in an aprotic polar solvent.

In the conventional production method, a dihydric phenyl compound and a dihalogenodiphenyl compound are used as raw material monomers, but in the method of this invention, the dihalogenodiphenyl compound is not used in

the reaction. This is a large difference.

[Chemical formulae 5]

Reaction scheme of aromatic polyethersulfone (A)

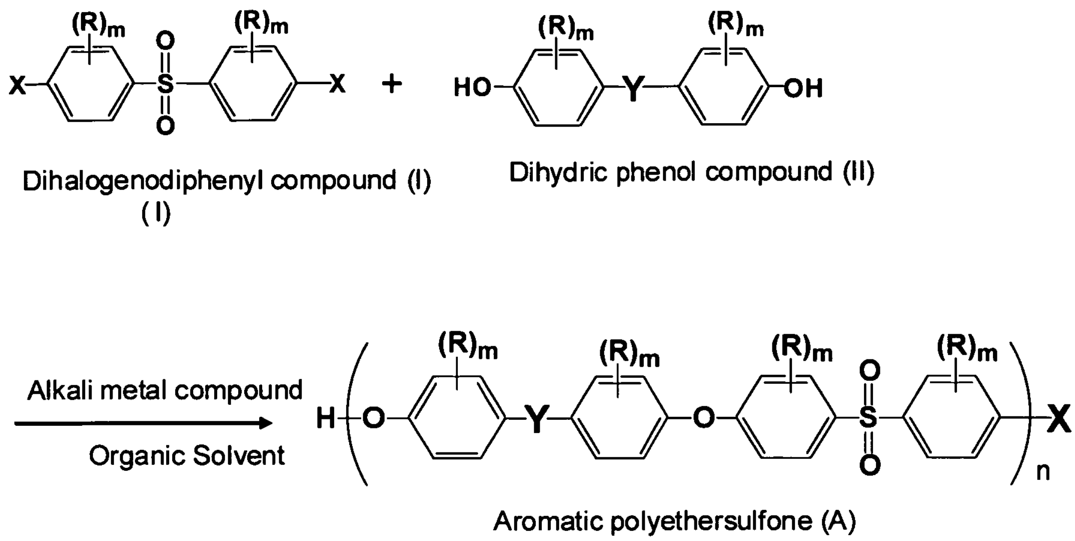


Dihalogenodiphenyl compound (I)
(I)

Dihydric phenol compound (II)

Aromatic polyethersulfone (A)

[Chemical formulae 6]

Reaction scheme of aromatic polyethersulfone (E) having hydroxyphenyl end groups, by employing dihydric phenol

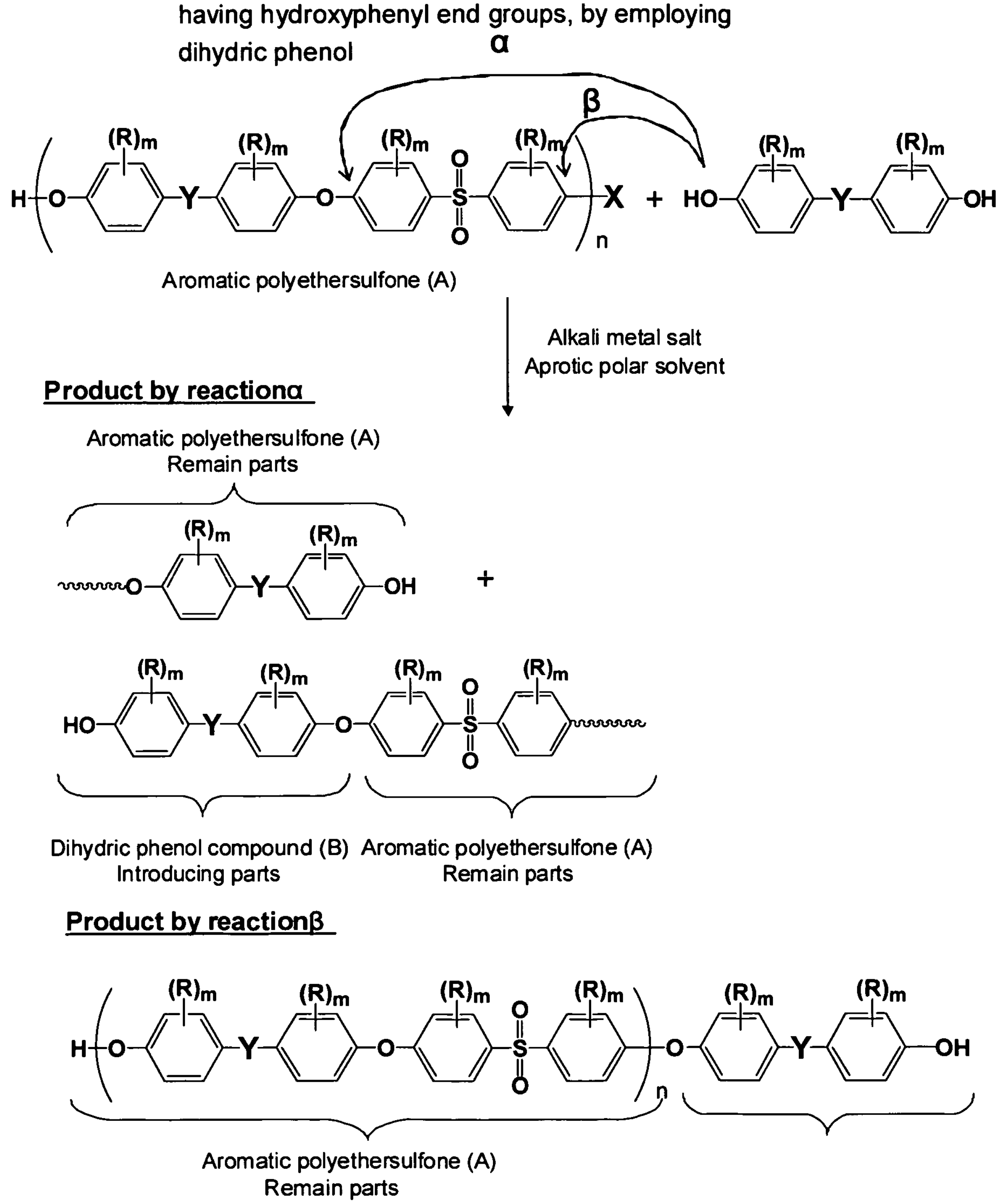

[Chemical formulae 7]

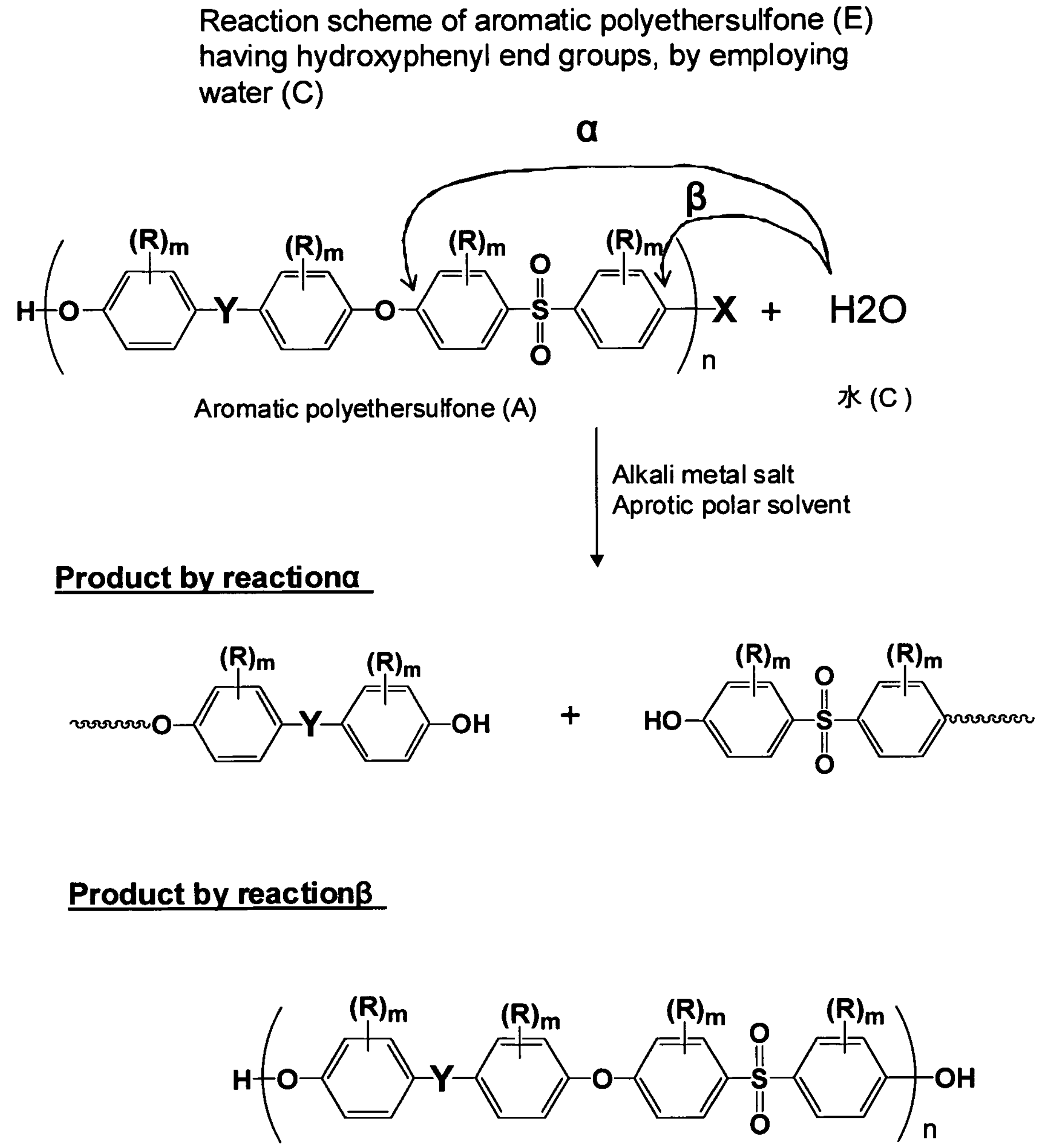


(where X denotes Cl or F; each R, which may be either the same as or different from other R's, denotes, respectively independently, any one selected from alkyl groups with 1 to 6 carbon atoms and aryl groups with 6 to 8 carbon atoms; m denotes an integer of 0 to 3; Y denotes any one selected from direct bond, O, S, $SO_2$ CO, $C(CH_3)_2$, $CH(CH_3)$ and $CH_2$.)

To clarify this invention, the reaction schemes are shown in the above formulae. At first, a PES (A) relatively higher in molecular weight than the intended PES having hydroxyphenyl end groups (E) is produced beforehand by polymerization. In this case, a dihalogenodiphenyl compound (I) and a dihydric phenol compound (II) (II-1 is used in this case) are polymerized by a publicly known conventional method, and the polymer is recovered and subsequently, as required, washed and dried, to be used as the raw material. Since monomers, solvent and alkali remain in the reaction solution after polymerization, it is especially preferred that the recovered PES (A) to be used in this invention is washed and dried.

This polymer (A) as an intermediate raw material, a dihydric phenol compound (B) (b-1 in this case) and/or water (C) and a basic compound (D) are heated in an aprotic polar solvent, to induce a PES having hydroxyphenyl end groups (E) by the nucleophilic substitution reaction into the main polymer chain of the PES (A) by the dihydric phenol compound (B) and/or water (C) (the positions of arrows $\alpha$ in the formulae).

Further in the reaction of this invention, in addition to the nucleophilic substitution reaction into the main polymer chain, the nucleophilic substitution reaction of the halogenophenyl ends and the dihydric phenol compound (B) and/or water (C) (the positions of $\beta$s in the formulae) also produces hydroxyphenyl end groups. Since the halogenophenyl ends exist very slightly at the polymer ends only compared with the moles of the main polymer chain, the nucleophilic substitution reaction into the main polymer chain is probabilistically dominant. However, if the added amount of the dihydric phenol compound (B) and/or water (C), the added amount of the basic compound (D), reaction temperature and reaction time are adjusted, not only the nucleophilic substitution reaction into the main polymer chain (reaction of $\alpha$) but also the nucleophilic substitution reaction into the halogenophenyl ends (reaction of $\beta$) can be caused to take place simultaneously, to induce a PES having a high hydroxyphenyl end group rate (E).

On the other hand, in the case of publicly known polycondensation, the ratio (r) of the number of moles of the supplied dihalogenodiphenyl sulfone to the number of moles of the supplied dihydric phenol compound, and the molecular weight and the end group ratio of the polymer obtained in this case are as follows, as described, for example, in "Kobunshi Kagaku Joron (= Introduction to Polymer Chemistry)" (second edition), (page 206, published by Kagaku Dojin):

r = Number of moles of supplied dihalogenodiphenyl sulfone (a)/Number of moles of supplied dihydric phenol compound (b) (a/b = r, with the component of a larger amount as the denominator) and if the rate of reaction is p, the number average polymerization degree (Pn) of the polymer obtained in this case can be expressed as

$$Pn = (1 + r)/[2r(1 - p) + (1 - r)].$$

If the rate of reaction is assumed to be 100% (p = 1), we have

$$Pn = (1 + r)/(1 - r)$$

In the case where the amount of the dihydric phenol compound is 1% larger, the number average polymerization degree is 201 from this formula. Furthermore, the end group ratio is equal to the ratio of the numbers of moles of the respectively supplied monomers, being [Halogenophenyl ends]/[Hydroxyphenyl ends] = r = 1.0/1.01.
Therefore, the hydroxyphenyl end group rate is about 50.2% (if the rate of reaction is less than 100%, the hydroxyphenyl end group rate becomes lower).

On the other hand, in the case where the amount of the supplied dihydric phenol compound is 10% larger (r = 1.0/1.1) for producing a larger amount of hydroxyphenyl end groups in the obtained polymer, the number average polymerization degree is 21, and the hydroxyphenyl end group rate is about 52.4%. Further, in the case where the amount of the supplied dihydric phenol compound is 50% larger (r = 1.0/1.5), the number average polymerization degree is as small as 5, and the produced hydroxyphenyl end group rate is about 60 mol%. The theoretical molecular weight in this case is very low, and it is theoretically impossible to obtain a polymer with a high molecular weight and a high hydroxyphenyl end group rate.

The inventors found that this reaction allows the hydroxyphenyl end groups to be introduced efficiently and quantitatively, and further that according to this reaction, the intended PES having hydroxyphenyl end groups can be obtained at a high yield. Furthermore, the inventors found that this reaction can preferably provide a highly pure PES having a high hydroxyphenyl end group rate and a molecular weight higher than those of the PESs obtained by the conventional methods, and also found that the post processing step can be very simplified. The dihydric phenol compound (B) used in this invention is represented by the following general formula (b-1) and/or (b-2).

[Chemical formulae 8]

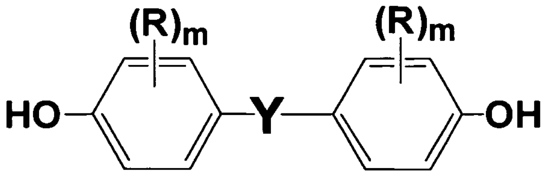

(b-1)

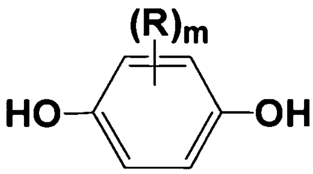

(b-2)

(where each R, which may be either the same as or different from other R's denotes, respectively independently, any one selected from alkyl groups with 1 to 6 carbon atoms and aryl groups with 6 to 8 carbon atoms; m denotes an integer of 0 to 3; Y denotes any one selected from direct bond, O, S, $SO_2$ CO, $C(CH_3)_2$, $CH(CH_3)$ and $CH_2$.)

Examples of the dihydric phenol compound (B) include hydroquinone, catechol, resorcin, 4,4'-biphenol, bis(4-hydroxyphenyl)alkanes such as 2,2-bis(4-hydroxyphenyl)propane, 2,2-bis(4-hydroxyphenyl)methane and 2,2-bis(4-hydroxyphenyl)ethane, dihydroxydiphenyl sulfones such as 4,4'-dihydroxydiphenyl sulfone, dihydroxydiphenyl ethers such as 4,4'-dihydroxydiphenyl ether, and structural isomers thereof. Among them, in view of availability, practicality and price, preferred are hydroquinone, 4,4'-biphenol, 4,4'-dihydroxydiphenyl sulfone (bisphenol-S), 2,2-bis(4-hydroxyphenyl) propane (bisphenol-A), bis(4-hydroxyphenyl)methane (bisphenol-F), 4,4'-ethylidenebisphenol (bisphenol-E), 4,4'-dihydroxydiphenyl ether and 4,4'-dihydroxydiphenyl sulfone, and structural isomers of these dihydric phenol compounds (B) can also be used. More preferred are 4,4'-dihydrodiphenyl sulfone (bisphenol-s), 2,2-bis(4-hydrophenyl)propane (bisphenol-A), bis(4-hydroxyphenyl)methane (bisphenol-F) and 4,4'-ethylidenebisphenol (bisphenol-E), and especially preferred are 4,4'-dihydroxydiphenyl sulfone (bisphenol-S) and 2,2-bis(4-hydroxyphenyl)propane (bisphenol-A).

The added amount of the dihydric phenol compound (B) used in this reaction depends on the intended end group ratio and the intended molecular weight of the PES having hydroxyphenyl end groups (E) to be finally obtained. The end group ratio and the molecular weight can rather be controlled by adjusting the added amount of the dihydric phenol compound (B). For allowing the reaction to progress quantitatively, it is preferred to add 0.001 to 2.0 moles of the dihydric phenol compound (B) per 1 mole of the PES (A). A more preferred range is 0.01 to 1.5 moles, and a further more preferred range is 0.01 to 1.0 mole. An especially preferred range is 0.01 to 0.5 mole. Meanwhile, the number of moles of the PES (A) is calculated in reference to the molecular weight of one recurring unit represented by the aforementioned formula (a-1) or (a-2).

If the added amount of the dihydric phenol compound (B) is 0.2 moles or more, the molecular weight of the obtained aromatic polyethersulfone having hydroxyphenyl end groups (E) is too small, and it is difficult to recover and wash the polymer, and the acidic unreactive dihydric phenol compound (B), the salt of the dihydric phenol compound and the basic compound (D) per se may remain in the polymer, the polymer tending to be colored. Particularly as the introduced amount of hydroxyphenyl end groups increases, the solubility of the polymer and the interaction with the basic compound increase. Therefore, washing, recovery and separation tend to be difficult. On the other hand, if the amount is 0.001 mole or less, it is difficult to quantitatively introduce the hydroxyphenyl end groups.

The water (C) used in this invention is not especially limited, but considering the impurity content in the obtained polymer, it is preferred to use water with the impurity content kept as small as possible.

The added amount of the water (C) used in the reaction depends on the intended end group ratio and the intended molecular weight of the PES having hydroxyphenyl end groups (E) to be finally obtained, and rather the end group ratio and the molecular weight can be controlled by adjusting the added amount of water (C). For the quantitative progress of the reaction, it is preferred that the amount is 0.01 to 50 moles per 1 mole of the PES (A). A more preferred range is 0.1 to 40 moles, and an especially preferred range is 0.1 to 30 moles. Meanwhile, the number of moles of the PES (A) in this case is calculated in reference to the molecular weight of one recurring unit expressed by the aforementioned formula (a-1) or (a-2).

If the added amount of water (C) is 50 moles or more, the molecular weight of the obtained aromatic polyethersulfone having hydroxyphenyl end groups (E) becomes so small that it is difficult to recover and wash the polymer. In addition, the solubility of the PES (A) in the solvent declines, and precipitation is likely to occur. So, for the homogeneous

progress of the reaction, the concentration of the PES (A) in the aprotic polar solvent used is required to be lowered. However, lowering the concentration of the PES (A) is not industrially realistic for such reasons that the reactivity declines to elongate the reaction time and that the increased solvent makes it difficult to recover and wash the polymer and raises the cost. On the other hand, if the amount is 0.01 mole or less, it is difficult to quantitatively introduce hydroxyphenyl end groups.

In this invention, the added amount of the water (C) and the amount of the basic compound (D) are used to control the end group ratio and the molecular weight of the intended PES (E). Therefore, it is preferred that the water slightly contained in the raw materials, the water entering from outside during the reaction, the water used for preparing the basic compound, and other water are removed as far as possible, since any reaction by the water existing in the system other than the intended reaction of this invention, namely, other than the nucleophilic substitution reaction of the PES (A) as an intermediate raw material and the added water (C) can take place, making it difficult to control the intended end group ratio and the intended molecular weight of the PES having hydroxyphenyl end groups (E).

For the quantitative progress of the reaction of this invention, as an organic solvent of the reaction, an aprotic polar solvent is used. Examples of the solvent include dimethyl sulfoxide, N,N-dimethylformamide (DMF), N,N-dimethylacetamide, N-methyl-2-pyrrolidone (NMP), N-methyl-2-piperidone, 1,3-dimethyl-2-imidazolidinone, a mixture consisting of two or more of the foregoing, etc. Especially preferred are dimethyl sulfoxide, DMF and NMP.

The amount of the aprotic polar solvent used in the reaction is not especially limited if the amount can dissolve the PES (A) and the dihydric phenol compound (B). However, it is preferred that the amount is in a range from 0.5 to 20 times the weight of all the monomers. A more preferred range is 2 to 10 times.

If the amount is less than 0.5 time, the PES (A) and the dihydric phenol compound (B) cannot be dissolved, and the operations during reaction such as stirring are difficult, not allowing a homogeneous reaction to be achieved easily. Further, if the amount of the solvent is more than 20 times, the concentration of the polymer and the concentration of the dihydric phenol compound (B) and/or water (C) decline to lower the reaction rate, and reprecipitation, washing and recovery tend to be difficult. Above all, the increase in the amount of the solvent decreases production and affects the cost of recovering the solvent.

In this invention, it is important that the reaction is performed in an aprotic polar solvent, but as the case may be, an organic solvent other than the aprotic polar solvent can also be used together. Particularly the water slightly contained in the raw materials, the water entering from outside during the reaction, the bound water of the basic compound used, the water in the basic compound aqueous solution when the basic compound is prepared, and other water existing in the system may cause hydrolysis in addition to the intended reaction of this invention, namely, the nucleophilic substitution reaction of the PES (A) as an intermediate raw material and the dihydric phenol compound (B) and/or water (C). The water in the reaction system may disturb the reaction of this invention. Therefore, for the purpose of separating the water in the reaction system, a solvent that is compatible with the aprotic polar solvent and can form an azeotropic mixture with water at 0.101 MPa can be used. The solvent is not especially limited. Examples of the solvent include hydrocarbon solvents such as pentane, hexane, heptane, octane, cyclohexane, dodecane, benzene, toluene, xylene, naphthalene and ethylbenzene, ether solvents such as diisopropyl ether, ethyl butyl ether and dioxane, ketone solvents such as acetyl acetone and methyl ethyl ketone, alcohol solvents such as ethanol, isopropanol, n-propanol, isobutyl alcohol, hexanol and benzyl alcohol, ester solvents such as ethyl acetate, methyl acetate, butyl acetate, butyl butyrate and methyl benzoate, carboxylic acid solvents such as formic acid, acetic acid, propionic acid, valeric acid and benzoic acid, halogen solvents such as chloroform, bromoform, 1,2-dichloromethane, 1,2-dichloroethane, carbon tetrachloride, chlorobenzene and hexafluoroisopropanol, amine solvents such as ethylenediamine, aniline, pyridine and methylpyridine, etc. It is preferred to use a hydrocarbon. It is more preferred to use at least one selected from benzene, toluene and xylene.

The amount of the water azeotrope solvent used is not especially limited, if the amount can remove the water in the system. It is preferred that the amount is in a range from 0.01 to 10 times the weight of all the monomers. A more preferred range is 0.02 to 5 times. Further, in the reaction of this invention, if a basic compound (D) is added to the reaction, the reaction rate can be further enhanced. Examples of the basic compound (D) used include alkali metal compounds such as sodium hydroxide, potassium hydroxide, lithium hydroxide, rubidium hydroxide, cesium hydroxide, sodium acetate, potassium acetate, sodium hydrogencarbonate, potassium hydrogencarbonate, lithium hydrogencarbonate, sodium carbonate, potassium carbonate, lithium carbonate, cesium carbonate, anhydrous potassium carbonate and anhydrous sodium carbonate, alkaline earth metal compounds such as calcium hydroxide, magnesium hydroxide, calcium hydrogencarbonate, barium hydrogencarbonate, magnesium hydrogencarbonate and calcium carbonate, quaternary ammonium salts such as tetramethylammmonium hydroxide and tetraethylammonium hydroxide, tertiary amines such as trimethylamine and triethylamine, secondary amines such as N,N-dimethylamine and N,N-diethylamine, primary amines such as N-methylamine and N-ethylamine, ammonia, etc. Among them, in view of handling convenience, sodium hydroxide, potassium hydroxide, sodium carbonate, potassium carbonate, anhydrous sodium carbonate, anhydrous potassium carbonate, etc. can be used. Above all, it is preferred to use one or more selected from sodium carbonate, potassium carbonate, anhydrous sodium carbonate and anhydrous potassium carbonate.

It is preferred that the added amount of the basic compound (D) is in a range from 0.1 to 3 moles per 1 mole of the dihydric phenol compound (B) used. A more preferred range is 0.5 to 1 mole.

If the added amount of the basic compound (D) is more than 3 moles per 1 mole of the dihydric phenol compound (B), the acidic dihydric phenol compound, the salt of the dihydric phenol compound and the basic compound (D) per se remain in the polymer, and the polymer tends to be colored. On the other hand, if the amount is less than 0.5 mole, it is difficult to introduce reactive hydroxyphenyl end groups.

Further, in the case where water is used, it is preferred that the added amount of the basic compound (D) is in a range from 0.01 to 2 moles per 1 mole of the water (C) used. A more preferred range is 0.01 to 1 mole.

If the added amount of the basic compound (D) is more than 2 moles per 1 mole of water (C), the basic compound (D) tends to heterogeneously exist without being dissolved in the solvent, and the excessive basic compound may remain in the polymer, the polymer tending to be colored. On the other hand, if the amount is less than 0.01 mole, it is difficult to introduce reactive hydroxyphenyl end groups.

The heating temperature depends on the solvent used, the boiling point of the solvent, the concentration of the reaction solution, the added amount of the dihydric phenol compound (B) and/or water (C), and the added amount of the basic compound (D). However, it is usually preferred that the temperature is 100 to 250˚C. A more preferred range is 100 to 200˚C. If the reaction is performed at a high temperature higher than 250˚C, the thermal decomposition of the dihydric phenol compound salt and the thermal decomposition of the PES having hydroxyphenyl end groups (E) per se produced in the reaction system take place. Therefore, it is difficult to control the molecular weight and to control the amount of the hydroxyphenyl end groups introduced, and the finally obtained PES (E) tends to decline in thermal stability and retention stability and tends to be colored. On the other hand, if the reaction is performed at a temperature lower than 100˚C, there arises a problem that the reaction becomes very slow.

The time taken for the reaction greatly varies depending on the dihydric phenol compound (B) used, the added amount of the dihydric phenol compound (B) and/or the added amount of water (C), the basic compound (d) used, the added amount of the basic compound (D), reaction concentration and reaction temperature. Usually the time is in a range from 10 minutes to 10 hours. A preferred range is 30 minutes to 5 hours. As the reaction atmosphere, it is preferred that no oxygen exists, and if the reaction is performed in nitrogen or any other inert gas, good results can be obtained. The dihydric phenol compound and the basic compound are likely to be oxidized if they are heated in the presence of oxygen, to prevent the intended reaction. As a result, it is difficult to control the molecular weight and to control the amount of the hydroxyphenyl end groups introduced, and the coloration of the polymer is also caused.

If a crude PES having hydroxyphenyl end groups is obtained by the method of this invention, it can be separated as a precipitated solid by adding a poor solvent of the PES to the reaction solution or adding the reaction solution to a poor solvent after separating the basic compound contained in the reaction solution through filtration or centrifugation or without performing filtration or centrifugation for separation. Examples of the poor solvent of the PES having hydroxyphenyl end groups include alcohols such as methanol, ethanol, isopropanol and butanol, nitriles such as acetonitrile, water, etc. Two or more of the poor solvents can also be used as a mixture. Further, the poor solvent may also contain a good solvent of the polymer such as any of the aforementioned polymerization reaction solvents to such an extent that the polymer can be precipitated.

(3) Method for producing the particles of the PES having hydroxyphenyl end groups (E) (step II)

As a method for producing particles from the aromatic polyethersulfone having hydroxyphenyl end groups of this invention, PES particles can be produced by precipitation in the co-presence of a surfactant after completion of the step (I).

Examples of the method for precipitating the PES particles include:

(a) Method of cooling in the co-presence of a surfactant for precipitation after completion of the step (I)
(b) Method of removing the solvent in the co-presence of a surfactant for precipitation after completion of the step (I)
(c) Method of adding a solvent incompatible with the PES to the solution in the co-presence of a surfactant after completion of the step (I)
(d) Method of adding a solvent incompatible with the solvent capable of dissolving the PES to the solution in the co-presence of a surfactant, to form an emulsion and removing the solvent capable of dissolving the PES for precipitation, after completion of the step (I)

Meanwhile, any method and procedure can be employed for adding the surfactant only if the surfactant can exist together when the PES is precipitated. In view of easy process, the method (c) can be preferably used.

The surfactant can be one or more as a mixture selected from anionic surfactants such as sodium salts of fatty acids, potassium salts of fatty acids, sodium alkylbenzenesulfonate, alkylsulfuric ester sodium, sodium alkylsulfonate, alkyl ether sulfuric ester sodium, sodium polysulfonate and sodium polyacrylate, cationic surfactants such as a trialkylmethylammonium chloride, alkyltrimethylammonium chloride and dialkyldimethylammonium chloride, nonionic surfactants such as perfectly saponified or partially saponified polyvinyl alcohol, perfectly saponified or partially saponified poly(vinyl alcohol-ethylene) copolymer, polyethylene glycol, sucrose fatty acid ester, polyoxyethylene fatty acid ester, polyoxyethylene laurin fatty acid ester, polyoxyethylene glycol mono-fatty acid ester, polyoxyethylene alkylphenyl ether, polyoxyalkyl ether, polyacrylic acid, polymethacrylic acid, polyacrylamide, polymethacrylamide, carboxymethyl cellulose, polyoxyethyleneamine, polyvinylpyrrolidone and cellulose, and amphoteric surfactants such as alkylaminocarboxylic acid salt and carboxybetaine. Meanwhile, the alkyl in this case refers to a straight-chain or branched-chain saturated hydrocarbon group or a straight-chain or branched-chain unsaturated hydrocarbon group with 2 to 30 carbon atoms. Among the surfactants, preferred is a surfactant with a number average molecular weight of 1000 or more. Especially preferred is one or two or more as a mixture selected from perfectly saponified or partially saponified polyvinyl alcohol, perfectly saponified or partially saponified poly(vinyl alcohol-ethylene) copolymer, polyethylene glycol and polyvinylpyrrolidone. Meanwhile, the number average molecular weight in this case is calculated using a gel permeation chromatograph in comparison with the calibration curve for polyethylene glycol.

It is preferred that the added amount of the surfactant is 1 to 200 parts by mass per 100 parts by mass of the PES (A). A more preferred range is 30 to 200 parts by mass, and a further more preferred range is 50 to 200 parts by mass. It is not preferred that the added amount is smaller than said range for such reasons that the PES is obtained as coarse cohesive particles not as fine particles and that the particle size distribution tends to be wide. It is not preferred either that the amount is larger than said range, since the surfactant remains in the aprotic polar solvent.

(4) Method for producing the particles of the PES having hydroxyphenyl end groups (E) (step III)

It is preferred that the temperature of the homogeneous PES solution or suspension when the second solvent for precipitating the PES is added is 0 to 80˚C. A more preferred range is 10 to 60˚C.
It is not preferred that the temperature of the homogeneous PES solution or suspension is higher than said range, since the PES tends to be obtained as coarse cohesive particles not as fine particles.

As the second solvent, a solvent with a PES solubility of 1 mass% or less at 25˚C is used. The solvent is not especially limited if the solubility is in said range. The solvent can be one or two or more as a mixture selected from aliphatic hydrocarbon solvents such as pentane, hexane, heptane, octane, cyclohexane, cyclopentane, decane, dodecane, tridecane and tetradecane, aromatic hydrocarbon solvents such as benzene, toluene, xylene and 2-methylnaphthalene, ether solvents such as diethyl ether, tetrahydrofuran, diisopropyl ether and dioxane, ketone solvents such as acetone and methyl ethyl ketone, alcohol solvents such as methanol, ethanol, isopropanol and n-propanol, ester solvents such as ethyl acetate, methyl acetate, butyl acetate, butyl propionate and butyl butyrate, halogen solvents such as chloroform, bromoform, 1,2-dichloromethane, 1,2-dichloroethane, carbon tetrachloride and chlorobenzene, and water. Among them, preferred are water, methanol, ethanol, etc. One of them or a mixture consisting of two or more of them can be used. The solvent may contain the abovementioned aprotic polar solvent, if the PES (A) solubility can be kept in a range of 1 mass% or less.

It is preferred that the added amount of the second solvent is 10 parts by mass or more per 100 parts by mass of the homogeneous PES (A) solution or suspension. A more preferred range is 15 parts by mass or more. If the added amount is smaller than said range, the particles of the PES (E) cannot be precipitated.

It is preferred that the addition rate of the second solvent is 10 parts by mass/min or less per 100 parts by mass of the homogenous PES solution or suspension. A more preferred range is 5 parts by mass/min or less. It is not preferred that the addition rate is higher than said range, since the PES tends to be obtained as coarse cohesive particles not as fine particles.

A dispersion of the PES (E) particles can be obtained by the method as described above.

For isolating the PES (E) particles from the dispersion of PES particles, a publicly known ordinary method comprising solid-liquid separation, washing and drying can be used. The method is explained below in detail.

For isolating the PES (E) particles from the PES particle dispersion containing the PES (E) particles, aprotic polar solvent, second solvent and surfactant, a publicly known method can be used. Examples of the method include filtration, decantation, centrifugation, precipitation using an acid, precipitation using a salt, spray drying method, freeze solidification, etc.

As the method for washing the PES (E), it is preferred to sufficiently wash to ensure that the dihydric phenol compound (B), basic compound (D), aprotic polar solvent and surfactant do not remaining in the PES (E).

As the solvent for washing the PES (E), it is preferred to use the second solvent. It is more preferred to use one or more as a mixture selected from water, methanol and ethanol.

The solvent remaining after solid-liquid separation can be recovered for reuse in any of the steps of the PES production process or in the washing step of the PES particle production process, to enhance productivity.

As the method for drying the PES (E), a publicly known method can be used. For example, air drying, heat drying, reduced-pressure drying, freeze drying and the like can be used. In the case of heating, it is preferred that the

temperature is lower than the glass transition temperature or in a range from 50 to 150˚C.

The abovementioned methods can be used for obtaining the particles of the PES having hydroxyphenyl end groups (E).

For obtaining the PES having hydroxyphenyl end groups (E) of this invention, it is preferred that an acid is brought into contact with the PES in any of the steps of this invention. The step when the acid is brought into contact with the PES is not especially limited. It is preferred that the contact between the PES and the acid is achieved after completion of reaction, or at the time of precipitation using a poor solvent or after recovery of the particles, since the basic compound contained in the PES can be efficiently removed.

The acid used can be one or more as a mixture selected from inorganic acids such as hydrochloric acid, nitric acid, sulfuric acid, phosphoric acid, perchloric acid, sulfurous acid, chromic acid, hypochlorous acid, hydrogen cyanide, hydrobromic acid and boric acid, and organic acids such as acetic acid, formic acid, oxalic acid, tartaric acid, stearic acid, naphthenic acid, picric acid and malic acid, though not limited to these acids.

The amount of the acid used is not especially limited, since it is affected by the solubility into the solvent used, etc. However, it is preferred that the amount is in a range from 0.001 to 2 moles per 1 mole of the PES. A more preferred range is 0.01 to 1 mole. It is not preferred that the amount of the acid is smaller than this range, since the alkali metal salt cannot be sufficiently removed.

After having been brought into contact with the acid, the PES is washed with a poor solvent and dried, to obtain a PES having hydroxyphenyl end groups (E).

(5) Properties of the PES having hydroxyphenyl end groups (E)

As regards for the end group rates of the PES having hydroxyphenyl end groups (E), two protons ($H_{Cl}$) adjacent to the aromatic carbon substituted by chlorine at 7.7 ppm and two protons ($H_{OH}$) adjacent to the aromatic carbon substituted by a hydroxyl group can be observed at high resolution through, for example, 100 scans with 400 MHz $^1$H-NMR in DMSO-d6 solvent, and the area ratio of $^1$H-NMP reflects the number of moles as well known, so the hydroxyphenyl end group rate (mol%) and the chlorophenyl end group rate (mol%) can be calculated from the following formulae:

$$\text{[Hydroxyphenyl end group rate (mol\%)]} = \text{[Peak area of } H_{OH}\text{]}/(\text{[Peak area of } H_{OH}\text{]} + \text{[Peak area of } H_{Cl}\text{]}) \times 100$$

$$\text{[Chlorophenyl end group rate (mol\%)]} = \text{[Peak area of } H_{Cl}\text{]}/(\text{[Peak area of } H_{OH}\text{]} + \text{[Peak area of } H_{Cl}\text{]}) \times 100$$

That is, in the case where hydroxyphenyl end groups and chlorophenyl end groups exist at a ratio of 1 : 1, the ratio of hydroxyphenyl end group rate/chlorophenyl end group rate can be expressed by 50/50 mol%.

According to the production method of this invention, if reaction conditions such as the end group ratio of the PES (A) used as the starting raw material and the added amount of the dihydric phenol compound (B) and/or water (C) used at the time of reaction are selected within the ranges of this invention, the hydrophenyl end group rate and the molecular weight can be adjusted as appropriate. A preferred hydroxyphenyl end group rate (mol%) of the finally obtained PES having hydroxyphenyl end groups (E) is 60 mol% or more. More preferred is 70 mol% or more, and further more preferred is 80 mol% or more.

Particularly according to the production method of this invention, a PES with a hydroxyphenyl end group rate of 60 mol% or more, or further a PES with a hydroxyphenyl end group rate of 80 mol% or more can also be produced, even though it is difficult to produce such a PES by the publicly known conventional production methods.

The PES having hydroxyphenyl end groups (E) obtained in a preferred mode of this invention contains a large amount of highly reactive hydroxyphenyl end groups. Further, the PES is excellent in heat resistance, chemicals resistance, flame retardancy, electric properties and mechanical properties and is especially excellent in productivity compared with the PES (A) obtained by any of the conventional methods or compared with a low molecular weight PES with the hydroxyphenyl end group rate increased by shifting the mole balance. Furthermore, the PES has also such features that the hydroxyphenyl end group rate is high, that the molecular weight distribution is narrow and that the metal content is very small.

It is preferred that the molecular weight of the PES having hydroxyphenyl end groups (E) of this invention is 0.2 to 0.4 as the reduced viscosity measured in the DMF of said polymer at 25˚C, in view of the hydroxyphenyl end group rate, molecular weight and glass transition temperature of the finally obtained polymer, the end group reactivity

when this polymer is alloyed with a thermoplastic resin or thermosetting resin, and the effect of enhancing compatibility owing to the end group reaction. A more preferred range is 0.25 to 0.4.

If the reduced viscosity is replaced by the number average molecular weight (Mn) obtained using gel permeation chromatography (GPC) with polystyrene as a standard in DMF solvent, it is preferred that the number average molecular weight is 26,000 to 540,000. A more preferred range is 33,000 to 54,000.

The PES having hydroxyphenyl end groups (E) of this invention is not especially limited, since it is affected by the reaction temperature, reaction time, water content, the raw material used, etc. The molecular weight and the hydroxyphenyl end group rate of the PES having hydroxyphenyl end groups (E) obtained in a preferred mode tend to depend on the molecular weight of the PES (A) used as the raw material and the added amount of the dihydric phenol compound (B) and/or water (C).

For example, the hydroxyphenyl end group rate of the PES having hydroxyphenyl end groups (E) obtained in a preferred mode in DMSO at 150˚C for 5 hours is proportional to the added amount of the dihydric phenol compound (B) and/or water (C) . Further, for letting the PES having hydroxyphenyl end groups (E) have a preferred reduced viscosity of 0.2 to 0.4 and a preferred hydroxyphenyl end group rate of 60 to 100%, in the case where a PES (A) with a hydroxyphenyl end group rate of 50% is used, the preferred reduced viscosity of the PES (A) is in a range from about 0.25 to about 0.55 or higher, and in the case where a PES (A) with a hydroxyphenyl end group rate of 0% is used, the preferred reduced viscosity of the PES (A) is in a range form about 0.35 to about 0.75 or higher.

However, if the reduced viscosity of the PES (A) used is low (if the number average molecular weight is low), the molecular weight of the finally obtained PES having hydroxyphenyl end groups (E) becomes small, and the polymer portions with low molecular weights and the oligomer are dissolved in the poor solvent or swollen, and as a result, the recovery rate and washing efficiency of the polymer tend to decline. Further, the lowered washing efficiency tends to increase the amount of impurities such as alkali metal compound in the polymer. Furthermore, the lower molecular weight may lower the glass transition temperature and lower the heat resistance that is a feature peculiar to a PES as the case may be. Moreover, if the reduced viscosity of the PES (A) is high (if the number average molecular weight is high), the added amounts of the dihydric phenol compound (B) and the basic compound (D) and/or water (C) must be increased for obtaining a PES having hydroxyphenyl end groups (E) with the molecular weight kept in a preferred range. Therefore, the solubility of the PES (A) declines and the acidic unreactive dihydric phenol compound (B) and the basic compound (D) remain in the polymer, the polymer tending to be colored, and washing, recovery and separation tending to be difficult. So, it is most preferred that the reduced viscosity of the PES (A) used as the raw material is 0.4 to 0.6.

Meanwhile, the reduced viscosity in this case refers to the reduced viscosity measured in DMF at 25˚C and 1 g/dl.

If the method for producing particles from the PES having hydroxyphenyl end groups (E) of this invention is used, PES (E) particles with a number average particle size of 0.1 to 50 μm can be obtained. A more preferred range of the number average particle size is 0.1 to 30 μm. If the number average particle size is smaller than said range, the handling convenience declines, and recovery and the like become difficult. So, the yield tends to decline. It is not preferred that the number average particle size is larger than said range, since the dihydric phenol compound (B) and the basic compound (D) tend to remain more in the particles, to lower the washing efficiency and to lower the quality of the PES due to coloration, etc. Meanwhile, the number average particle size of the PES particles is obtained by measuring the diameters of arbitrary 100 particles on a scanning electron microscope photo and calculating from the following formula (1). Meanwhile, if a particle is not completely round, the major axis is measured.

Further, it is preferred that the particle size distribution of the PES (E) particles of this invention is in a range from 1.0 to 1.5. It is preferred that the particles are uniform in particle size, since performance higher than expected may be exhibited when the PES (E) particles are applied as an additive for a polymer alloy, a catalyst carrier, a toner for electrophotography, a liquid crystal spacer, etc. For example, in the case where the particles are used as an additive for a polymer alloy, productivity can be greatly enhanced due to shortening of kneading time, etc. Meanwhile, the particle size distribution is calculated as the ratio of the volume average particle size to the number average particle size from the following formula (3). The volume average particle size is obtained by measuring the diameters of 100 arbitrary particles on a scanning electron microscope photo and calculating from the following formula (2). Meanwhile, in the case where a particle is not completely round, the major axis is measured.

$$Dn = \sum_{i=1}^{n} Ri \Big/ n \qquad (1)$$

where

Ri: Particle size of each particle
n: number of measured particles 100
Dn: Number average particle size
Dv: Volume average particle size
PDI: Particle size distribution

It is preferred that the amount of the alkali metal remaining in the PES having hydroxyphenyl end groups (E) is smaller in view of the influence on thermal stability, retention stability and coloration caused when the PES is alloyed with a thermoplastic resin or thermosetting resin. If the PES is intended to be alloyed with a thermoplastic resin or thermosetting resin or is obtained in a preferred mode of this invention, it is preferred that the remaining amount of the alkali metal is 1,000 ppm or less. More preferred is 500 ppm or less, and further more preferred is 100 ppm or less.
The PES having hydroxyphenyl end groups (E) obtained in a preferred mode is excellent in thermal stability, retention stability, coloration resistance, etc. as a polymer to be alloyed with any of various thermoplastic resins and thermosetting resins, and in addition, in the composition as an alloy consisting of the PES having hydroxyphenyl end groups (E) and a thermoplastic resin or thermosetting resin, the PES (E) is finely dispersed, furthermore dispersed in nano sizes in the polymer matrix. Moreover, the alloy has a structure in which the PES (E) and the resin are perfectly compatible with each other depending on the end group ratio, molecular weight and amount of the PES having hydroxyphenyl end groups (E) used. Thus, a thermoplastic resin alloy or thermosetting resin alloy very excellent in mechanical properties, heat resistance and electric properties can be provided.
Particularly according to the production method of this invention, a PES having reactive hydroxyphenyl end groups (E) suitable for such alloys can be produced quantitatively and efficiently by a very simple method as a polymer having a desired hydroxyphenyl end group rate and a desired molecular weight.

[Examples]

This invention is explained below more particularly in reference to examples. The examples are merely illustrative, and this invention is not limited thereto or thereby.

(1) Reduced viscosity ($\eta_{sp}$/c)

The reduced viscosity was measured in DMF at 25˚C and 1 g/dl using an Ostwald capillary viscometer.
Meanwhile, the reduced viscosity ($\eta_{sp}$/c) was calculated from the following formula, and the value obtained by averaging five measured values was used.

$$\eta_{sp}/c = (t - t_0)/t_0/c$$

t: Passing time of the polymer solution between the gauges of a viscometer (seconds)
to: Passing time of the pure solvent between the gauges of a viscometer (seconds)
c: Concentration of the polymer solution (g/dl)

(2) Determination of alkali metal content

The alkali metal content in a PES was determined by the following method. A sample weighed was placed in a quartz crucible and incinerated using an electric furnace. The incineration product was dissolved by concentrated nitric acid and the solution was diluted by diluted nitric acid. The obtained diluted solution was subjected to ICP gravimetric analysis (Instrument: 4500 produced by Agilent) and ICP emission spectrometry (Instrument: Optima 4300DV produced by PerkinElmer).

(3) Measurement of heating weight loss rate of a PES

The heating weight loss rate of a PES was measured under the following conditions using a thermogravimetric analyzer. Each sample was fine particles of 2 mm or less.
Instrument: TGA7 produced by PerkinElmer
Test atmosphere: Nitrogen stream, 100˚C to 600˚C, heating rate
10˚C/min
Weight of a supplied sample: Approx. 10 mg

In the measurement under the abovementioned conditions, the temperature at which a 10% weight loss was shown was identified as "10% weight loss temperature" for evaluation of thermal stability.

(4) Measurement of the number average molecular weight of a PES

As the number average molecular weight of a polymer, the number average molecular weight in terms of standard polystyrene was obtained using gel permeation chromatography (GPC). For GPC, differential refractometer RID-10A produced by Shimadzu Corporation was used as the detector, and LC-10ADvp was used as the pump, two connected Shodex KD-806M GPC columns produced by Showa Denko K.K. being used as the columns. The measurement was performed at a flow velocity of 0.5 mL/min, using dimethylformamide (DMF) as the eluent, and a solution with a sample concentration of 1 mg/mL was injected by 0.1 mL.

(5) Measurement of the number average molecular weight of a surfactant

As the number average molecular weight of a surfactant, the number average molecular weight in terms of standard polyethylene glycol was obtained using gel permeation chromatography (GPC). For GPC, differential refractometer RID-10A produced by Shimadzu Corporation was used as the detector, and LC-10ADvp was used as the pump, two connected Shodex GF-7MHQ GPC columns produced by Showa Denko K. K. being used as the columns. The measurement was performed at a flow velocity of 1.0 mL/min, using water (ion exchange water) as the eluent, and a solution with a sample concentration of 1 mg/mL was injected by 0.1 mL.

(6) PES end group rates

By using a 400 MHz $^1$H-NMR (nuclear magnetic resonance) instrument (AL-400 produced by JEOL Ltd.), measurement was performed 100 scans in DMSO-d6 solution with a sample concentration of 1 mg/mL.

Protons adjacent to the aromatic carbon substituted by chlorine at 7.7 ppm ($H_{Cl}$) and protons adjacent to the aromatic carbon substituted by a hydroxyl group at 6.9 ppm ($H_{OH}$) were observed. The peak area ratio thereof was used to calculate the end group rates from the following relations.

$$[\text{Hydroxyphenyl end group rate (mol\%)}] = [\text{Peak area of } H_{OH}]/([\text{Peak area of } H_{OH}] + [\text{Peak area of } H_{Cl}]) \times 100$$

$$[\text{Chlorophenyl end group rate (mol\%)}] = [\text{Peak area of } H_{Cl}]/([\text{Peak area of } H_{OH}] + [\text{Peak area of } H_{Cl}]) \times 100$$

(7) Alloying with a thermoplastic resin

A small Brabender produced by Toyo Seiki Seisaku-sho Ltd. was used for melt mixing at a predetermined temperature for 15 minutes, and the obtained composition was pelletized and dried.

(8) Observation of the morphology of a thermoplastic resin alloy or thermosetting resin alloy

A transmission electron microscope (Hitachi Electron Microscope H-700) was used to observe the morphology on a cross section of an obtained resin composition. Thirty longest individual spherical dispersed particles were measured on a photo, and the measured values were averaged to obtain an average particle size.

(9) Measurement of thermal properties

Robot DSC produced by Seiko Denshi Kogyo K.K. was used to measure 5 to 8 mg of a sample by heating at a rate of 20˚C/min from 30˚C to 280˚C, keeping at the temperature for 5 minutes, and cooling at a rate of 20˚C/min down to 30˚C, keeping at the temperature for 5 minutes, and heating at a rate of 20˚C/min up to 300˚C in nitrogen atmosphere. The glass transition temperature (Tg) obtained during the heating of the second time was measured.

(10) Methods for calculating the number average particle size, volume average particle size and particle size distribution

A scanning electron microscope (Scanning Electron Microscope JSM-6301NF produced by JEOL Ltd.) was used to observe the PES particles and to measure the average particle size. Meanwhile, in the case where a particle was not completely round, the major axis was measured as the particle size.

The number average particle size (Dn) and the volume average particle size (Dv) were calculated as the average values of respectively 100 arbitrary particles from the following numerical formulae (1) and (2).

The particle size distribution (PDI) was calculated from the following numerical formula (3).

[Numerical formulae 2]

$$Dn = \sum_{i=1}^{n} Ri \Big/ n \qquad (1)$$

$$Dv = \sum_{i=1}^{n} Ri^{4} \Big/ \sum_{i=1}^{n} Ri^{3} \qquad (2)$$

$$PDI = Dv / Dn \qquad (3)$$

where Ri is the particle size of each particle; n is the number of measured particles 100; Dn is the number average particle size; Dv is the volume average particle size; and PDI is the particle size distribution.

Preparation of PESs (A)

[Reference Example 1] Preparation of PES (A-1)

In reference to the text and examples described in Patent Document 17 (JP 5-86186 A), a 1-liter four-neck flask equipped with a stirrer, thermometer, condenser, distillate separator and nitrogen introducing tube was charged with 4,4'-dihydroxydiphenyl sulfone (hereinafter abbreviated as DHDPS) (50.06 g, 0.20 mole), 100 ml of toluene, 1, 3-dimethyl-2-imidazolidinone (250.8 g) and 40% potassium hydroxide aqueous solution (56. 0 g, 0.39 mole), after they were weighed. With stirring, nitrogen gas was introduced to substitute the entire atmosphere by nitrogen. While nitrogen gas was introduced, the reaction system was heated up to 130˚C. The temperature of the reaction system rose, while the reflux of toluene was initiated, and the water and toluene in the reaction system were removed as an azeotrope, while toluene was returned to the reaction system to perform azeotropic dehydration at 130˚C for 4 hours. Thereafter, 4,4'-dichlorodiphenyl sulfone (hereinafter abbreviated as DCDPS) (57.40 g, 0.20 mole) was added to the reaction system together with 40 g of toluene, and the reaction system was heated up to 150˚C. While toluene was distilled away, a reaction was performed for 4 hours, to obtain a brown solution with a high viscosity. The reaction solution was cooled to room temperature, and the reaction solution was dropped into 1 kg of methanol, to precipitate a polymer powder. The polymer powder was recovered by filtration, and 1 kg of water was further added to it. Furthermore, 1N hydrochloric acid was added till the slurry solution became pH 3 to 4, namely, acidic. The polymer powder was recovered by filtration and washed with 1 kg of water twice. Further, the polymer powder was washed with 1 kg of methanol, and dried in vacuum at 150˚C for 12 hours. The obtained polymer powder was a white powder, and the yield amount was 88.3 g (yield rate 95.0%: Calculated from Yield rate = (88.3/464.53 (molecular weight of the PES (A))/0.2 × 100). The glass transition temperature (Tg) was 234˚C, and 10% weight loss temperature was 510˚C. The reduced viscosity was 0.58. The ratio of chlorophenyl end groups/hydroxyphenyl end groups measured by 400 MHz $^{1}$H-NMR was 50/50 (mmol%). The results are shown in Table 1.

[Reference Example 2] Preparation of PES (A-2)

The method as described in Patent Document 16 (JP 5-163352 A) was used to prepare a PES. A 1-liter four-neck flask equipped with a stirrer, nitrogen introducing tube, thermometer and condenser tube was charged with diphenylsulfone (611.6 g), DCDPS (57.43 g, 0.20 mole), DHDPS (47.55 g, 0.19 mole) and anhydrous potassium carbonate (30.4 g, 0.2200 mole), after they were weighed, and in nitrogen atmosphere, the reaction system was gradually heated up to 130˚C. After diphenylsulfone was dissolved, the reaction temperature was raised up to 300˚C while the reaction solution was stirred, to initiate polymerization. After a reaction period of 2 hours, the reaction was terminated, and the reaction solution was dropped into 1 kg of a mixed solvent of acetone/methanol = 1/1. The precipitated solid was ground and washed with 1 kg of water twice, being dried in vacuum at 130˚C for 12 hours. The viscosity of the solution was 0.35 g/dl. The ratio of chlorophenyl end groups/hydroxyphenyl end groups measured by 400 MHz $^1$H-NMR was 52/48 (mol%). The results are shown in Table 1.

[Reference Example 3] Production of a PES containing p-tert-butylphenyl end groups

The method of Patent Document 16 (JP 5-163352 A) was used to prepare a PES sealed at the ends. A 1-liter four-neck flask equipped with a stirrer, nitrogen introducing tube, thermometer and condenser tube was charged with diphenylsulfone (611.6 g), DCDPS (57.44 g, 0.20 mole), DHDPS (48.04 g, 0.19 mole), anhydrous potassium carbonate (30.40 g, 0.22 mole) and p-tert-butyl phenol (2.44 g, 0.016 mole) as an end sealing agent, after they were weighed, and in nitrogen atmosphere, the reaction system was gradually heated up to 130˚C. After diphenylsulfone was dissolved, the reaction temperature was raised up to 300˚C while the reaction solution was stirred, to initiate polymerization. After a reaction period of 2 hours, the reaction was terminated, and the reaction solution was dropped into 1 kg of a mixed solvent of acetone/methanol = 1/1. The precipitated solid was ground and washed with 1 kg of water, being dried in vacuum at 130˚C. The results are shown in Table 1.

In NMR, chlorophenyl end groups, hydroxyphenyl end groups and t-butyl groups as a new peak near 1.2 ppm were confirmed. From the proton area ratio of them, the ratio of chlorophenyl end groups/hydroxyphenyl end groups/p-tert-butylphenyl end groups was found to be 20/10/70 (mol%).

[Reference Example 4] Method for producing a PES having chlorophenyl end groups (A-4)

The method of Patent Document 16 (JP 5-163352 A) was used to prepare a PES sealed at the ends. A 1-liter four-neck flask equipped with a stirrer, nitrogen introducing tube, thermometer and condenser tube was charged with diphenylsulfone (611.6 g), DCDPS (57.44 g, 0.20 mole), DHDPS (48.04 g, 0.19 mole) and anhydrous potassium carbonate (30.4 g, 0.22 mole), after they were weighed, and in nitrogen atmosphere, the reaction system was gradually heated up to 130˚C. After diphenylsulfone was dissolved, the reaction temperature was raised up to 300˚C while the reaction solution was stirred, to initiate polymerization. After a reaction period of 2 hours, 0.096 L (0.04 mole) of chloromethane was blown in for sealing the ends. Then, the reaction solution was dropped into 1 kg of a mixed solvent of acetone/methanol = 1/1, and the precipitated solid was ground and washed with 1 kg of water twice, being dried in vacuum at 130˚C. The viscosity of the solution was 0.35. The results are shown in Table 1.

Since no hydroxyphenyl end groups were confirmed in NMR, it is estimated that all the end groups were converted into chlorophenyl end groups.

[Reference Example 5] Production of a bisphenol A type PES

A PES was produced as described in Reference Example 1, except that 2,2-bis(4-hydroxyphenyl)propane (hereinafter abbreviated as bisphenol-A (bisA)) (45.66 g, 0.20 mole) was used instead of the DHDPS (50.06 g, 0.20 mole) of Reference Example 1.

The obtained polymer powder was a white powder, and the yield amount was 85.0 g (yield rate 96.0%; Yield rate = (85.0/442.55 (molecular weight of the PES)/0.2 $\times$ 100). Since the polymer was different from those of Reference Examples 1 through 4 in main chain skeleton, the glass transition temperature was 191˚C, and 10% weight loss temperature was 488˚C. The reduced viscosity was 0.56 (g/dl). The ratio of chlorophenyl end groups/hydroxyphenyl end groups measured by 400 MHz $^1$H-NMR was 50/50 (mol%).

[Reference Example 6]

"Sumika Excel 3600P" produced by Sumitomo Chemical Co., Ltd.
The reduced viscosity was 0.36, and the glass transition temperature was 224˚C, 10% weight loss temperature being 510˚C. By 400 MHz $^1$H-NMR, chlorophenyl end groups only were observed.

[Reference Example 7]

"Sumika Excel 4800P" produced by Sumitomo Chemical Co., Ltd.

The reduced viscosity was 0.48, and the glass transition temperature was 230˚C, 10% weight loss temperature being 510˚C. By 400 MHz $^1$H-NMR, chlorophenyl end groups only were observed.

[Table 1]

Table 1

| | Aromatic polyet hersulfon e (A) | Dihydric phenol compound | Dihalodiphenyl sulfone compound | Yield (%) | η sp / o | Tg | 10%weight loss temperature | End group rate (mol%) | | |
|---|---|---|---|---|---|---|---|---|---|---|
| | | | | | | (˚C) | (˚C) | Chloropheny l end groups | Hydroxyphenyl end groups | Other end groups |
| Reference Example 1 | A - 1 | DHDPS | DCDPS | 95.0 | 0.58 | 234 | 510 | 50 | 50 | 0 |
| Reference Example 9 | A - 2 | DHDPS | DCDPS | 92.2 | 0.35 | 224 | 510 | 52 | 48 | 0 |
| Reference Example 3 | A - 3 | DHDPS | DCDPS | 94.7 | 0.34 | 224 | 515 | 20 | 10 | t-butylphenyl, 70 |
| Reference Example 4 | A - 4 | DHDPS | DCDPS | 96.0 | 0.35 | 224 | 515 | 100 | 0 | 0 |
| Reference Example 5 | A - 5 | bis A | DCDPS | 96.0 | 0.56 | 191 | 488 | 50 | 50 | 0 |
| Reference Example 6 | A - 6 | Commercially available product (Sumika Excel 3600P) | | | 0.36 | 224 | 510 | 100 | 0 | 0 |
| Reference Example 7 | A - 7 | Commercially available product (Sumika Excel 4800P) | | | 0.48 | 230 | 510 | 100 | 0 | 0 |

DHDPS: 4,4' -dihydroxydiphenyl sulfone
DCDDPS: 4,4' -dichlorodiphenyl sulfone
bisA: 2,2- bis(4- hydroxyphenyl)propane (bisphenol A)

Production of a PES (E) having hydroxyphenyl end groups using a dihydric phenol

[Working Example 1]

A 300 mL four-neck flask equipped with a stirrer, nitrogen introducing tube, thermometer and condenser tube was charged with DHDPS (1.25 g, 4.99 mmol), 200 ml of N-methyl-2-pyrrolidone (NMP) and anhydrous potassium carbonate (0.7 g, 5.06 mmol) per 5 g of the PES (A-1) synthesized in Reference Example 1 (10.7 mmol (calculated from 5/464.53 × 1000)), after they were weighed, and while the N-methyl-2-pyrrolidone (NMP) reaction solution was stirred, the reaction temperature was raised up to 150˚C. The reaction was performed for 5 hours and terminated, and the reaction solution was dropped into 500 ml of an acid methanol with a concentration of 0.1%. The precipitated solid was ground and washed with 500 ml of water twice, being dried in vacuum at 130˚C. The obtained polymer powder was a white powder, and the yield amount was 7.2 g, the yield rate being 96% (the yield rate was calculated from "Recovered PES weight/(Supplied PES (A-1) weight + Supplied DHDPS) × 100)." The glass transition temperature was 185˚C, and 10% weight loss temperature was 504˚C, the reduced viscosity (ηsp/c) being 0.25. By $^1$H-NMR, no chlorophenyl end groups were confirmed, and a PES with a hydroxyphenyl end group rate of 100 mol% could be obtained. The alkali metal content was 80 ppm. The results are shown in Table 3.

[Working Example 2]

A 300 mL four-neck flask equipped with a stirrer, nitrogen introducing tube, thermometer and Dean Stark azeotropic distillation apparatus was charged with DHDPS (1.25 g, 4. 99 mmol), 200 ml of N-methyl-2-pyrrolidone (NMP), 20 ml of toluene as a water azeotrope solvent and anhydrous potassium carbonate (0.7 g, 5.06 mmol) per 5 g of the PES (A-1) synthesized in Reference Example 1 (10.7 mmol (calculated from 5/464.53 × 1000)), after they were weighed, and the N-methyl-2-pyrrolidone (NMP) reaction solution was stirred, while the reaction temperature was raised up to 150˚C.
While water and toluene were removed as an azeotrope, the reaction was performed for 2 hours and terminated. The reaction solution was dropped into 500 ml of acid methanol with a concentration of 0.1%, and the precipitated solid was ground and washed with 500 ml of water twice, being dried in vacuum at 130˚C. The obtained polymer powder was a white powder, and the yield amount was 7.5 g while the yield rate was 98.7% (the yield rate was calculated from "Recovered PES weight/(Supplied PES (A-1) weight + Supplied DHDPS) x 100)." The glass transition temperature was 185˚C, and 10% weight loss temperature was 505˚C. The reduced viscosity (ηsp/c) was 0.28. By $^1$H-NMR, no chlorophenyl end groups were observed, and a PES with a hydroxyphenyl end group rate of 100 mol% could be obtained. The alkali metal content was 100 ppm. The results are shown in Table 3.

[Working Example 3]

A PES was obtained according to the method as described in Working Example 1, except that DMSO was used as the solvent instead of NMP. The results are shown in Table 3.

[Working Examples 4 to 7]

PESs were produced according to the method as described in Working Example 1, except that the ingredients and amounts shown in Table 2 were used to change the added amount of DHDPS and the added amount of anhydrous potassium carbonate. The results of these working examples are shown in Table 3.

[Working Examples 8 and 9]

PESs were produced as described in Working Example 1, except that sodium hydroxide or calcium hydroxide was used as the basic compound. The results are shown in Table 3.

[Working Examples 10 and 11]

PESs were produced as described in Working Example 1, except that bisphenol A or hydroquinone (HQ) was used as the dihydric phenol compound instead of DHDPS. The results are shown in Table 3.

[Comparative Example 1]

A PES was produced as described in Reference Example 1, except that the supplied amounts of DHDPS and

DCDPS were changed to use 55.96 g (0.22 mole) of DHDPS and 57.43 g (0.20 mole) of DCDPS, the amount of DHDPS being 1.1 molar times that of DCDPS. The obtained polymer powder was a white powder, and the yield amount was 68.8 g (yield rate 74.1%: Yield rate = (68.8/464.53 (molecular weight of the PES) /0.2 × 100). The glass transition temperature was 167˚C, and 10% weight loss temperature was 405˚C. The reduced viscosity was 0.23 dl/g. By 400 MHz $^1$H-NMR, the ratio of chlorophenyl end groups/hydroxyphenyl end groups was 60/40 (mol%), and during reprecipitation, the softening behavior of the polymer was observed. The remaining amount of the alkali metal was 1100 ppm.

[Comparative Example 2]

A PES was produced as described in Reference Example 1, except that the supplied amounts of DHDPS and DCDPS were changed to use 60.06 g (0.24 mole) of DHDPS and 57.40 g (0.20 mole) of DCDPS, the amount of DHDPS being 1.2 molar times that of DCDPS. The results are shown in Table 3.

[Comparative Example 3]

A PES was produced as described in Reference Example 3, except that DHDPS (4.00 g, 0.016 mole) was added as an end sealing agent instead of p-tert-butylphenol (2.44 g, 0.016 mole). The results are shown in Table 3.

[Table 2]

Table 2

| | Aromatic polyethersulfone (A) | | Dihydric phenol compound (B) | | (B)/(A) | Basic compound (D) | | Reaction solvent | Reaction conditions |
|---|---|---|---|---|---|---|---|---|---|
| | Compound | Supplied amount (g) (mmol) | Compound | Supplied amount (g) (mmol) | Mola ratio | Compound | Supplied amount (g) (mmol) | | |
| Working Example 1 | A - 1 | 5.0 (10.7) | DHDPS | 1.25 (4.99) | 0.47 | K2CO3 | 0.7 (5.06) | NMP | 150˚C/ 5h |
| Working Example 2 | A - 1 | 5.0 (10.7) | DHDPS | 1.25 (4.99) | 0.47 | K2CO3 | 0.7 (5.06) | NMP/ toluene | 150˚C/ 5h |
| Working Example 3 | A - 1 | 5.0 (10.7) | DHDPS | 1.25 (4.99) | 0.47 | K2CO3 | 0.7 (5.06) | DMSO | 150˚C/ 5h |
| Working Example 4 | A - 1 | 5.0 (10.7) | DHDPS | 0.5 (2.00) | 0.19 | K2CO3 | 0.28 (2.03) | NMP | 150˚C/ 5h |
| Working Example 5 | A - 1 | 5.0 (10.7) | DHDPS | 0.27 (1.08) | 0.10 | K2CO3 | 0.15 (1.09) | NMP | 150˚C/ 5h |
| Working Example 6 | A - 1 | 5.0 (10.7) | DHDPS | 0.10 (0.40) | 0.04 | K2CO3 | 0.06 (0.43) | NMP | 150˚C/ 5h |
| Working Example 7 | A - 1 | 5.0 (10.7) | DHDPS | 3.00 (11.99) | 1.12 | K2CO3 | 1.66 (12.01) | NMP | 150˚C/ 5h |
| Working Example 8 | A - 1 | 5.0 (10.7) | DHDPS | 0.50 (2.00) | 0.19 | NaOH | 0.08 (2.00) | NMP | 150˚C/ 5h |
| Working Example 9 | A - 1 | 5.0 (10.7) | DHDPS | 0.50 (2.00) | 0.19 | CaOH | 0.15 (2.02) | NMP | 150˚C/ 5h |
| Working Example 10 | A - 1 | 5.0 (10.7) | b isA | 0.46 (2.01) | 0.19 | K2CO3 | 0.28 (2.03) | NMP | 150˚C/ 5h |
| Working Example 11 | A - 1 | 5.0 (10.7) | HQ | 0.22 (2.00) | 0.19 | K2CO3 | 0.28 (2.03) | NMP | 150˚C/ 5h |
| Comparative Example 1 (as for the synthesis method, see the text) | | | | | | | | | |
| Comparative Example 2 (as for the synthesis method, see the text) | | | | | | | | | |

(continued)

| | Aromatic polyethersulfone (A) | | Dihydric phenol compound (B) | | (B)/(A) | Basic compound (D) | | Reaction solvent | Reaction conditions |
|---|---|---|---|---|---|---|---|---|---|
| | Compound | Supplied amount (g) (mmol) | Compound | Supplied amount (g) (mmol) | Mola ratio | Compound | Supplied amount (g) (mmol) | | |
| Comparative Example 3 (as for the synthesis method, see the text) | | | | | | | | | |
| DHDPS 4,4' -dihydroxydiphenyl sulfone<br>bis A: 2,2- bis(4- hydroxyphenyl)propene (bisphenol A)<br>HQ: Hydroquinone<br>K2CO3: Anhydrous potassium carbonate<br>NaOH: Sodium hydroxide<br>CaOH: Calcium hydroxide | | | | | | | | | |

[Table 3]

Table 3

| | Yield (%) | η sp / c | End group rate (mol%) | | Alkali metal cont ent | | 10%weight loss temperature | Tg |
|---|---|---|---|---|---|---|---|---|
| | | | Chlorophenyl end groups | Hydroxyphenyl end groups | Alkali metal | ppm | (˚C) | (˚C) |
| Working Example 1 | 96.0 | 0.25 | 0 | 100 | K | 80 | 504 | 185 |
| Working Example 2 | 98.7 | 0.28 | 0 | 100 | K | 100 | 505 | 185 |
| Working Example 3 | 97.0 | 0.26 | 0 | 100 | K | 80 | 505 | 185 |
| Working Example 4 | 97.0 | 0.30 | 8 | 92 | K | 50 | 508 | 204 |
| Working Example 5 | 96.0 | 0.36 | 21 | 79 | K | 30 | 510 | 214 |
| Working Example 6 | 97.0 | 0.40 | 38 | 62 | K | 20 | 508 | 210 |
| Working Example 7 | 93.0 | 0.20 | 0 | 100 | K | 100 | 500 | 180 |
| Working Example 8 | 89.0 | 0.30 | 20 | 80 | Na | 200 | 505 | 204 |
| Working Example 9 | 87.0 | 0.34 | 15 | 85 | Ca | 200 | 505 | 202 |
| Working Example 10 | 95.0 | 0.30 | 0 | 100 | K | 180 | 505 | 208 |
| Working Example 11 | 95.0 | 0.31 | 0 | 100 | K | 180 | 505 | 207 |
| Comparative Example 1 | 74.1 | 0.23 | 60 | 40 | K | 1100 | 405 | 167 |
| Comparative Example 2 | 70.1 | 0.13 | 30 | 70 | K | 1500 | 380 | 156 |
| Comparative Example 3 | 81.0 | 0.33 | 50 | 50 | K | 500 | 400 | 210 |

From Working Examples 1 through 11, it can be seen that if the PES (A-1) and a dihydric phenol compound (B) such as DHDPS, bisphenol-A or HQ are used to perform a reaction in NMP used as an aprotic polar solvent in the presence of a basic compound (D) such as anhydrous potassium carbonate, sodium hydroxide or calcium hydroxide, hydroxyphenyl end groups can be introduced in response to the added amount of the dihydric phenol compound and a polymer with a low alkyl metal content can be obtained at a high recovery rate.
From the results of Working Examples 1 through 7, it can be seen that if the added amount of DHDPS is kept in a range from 0.04 to 1.1 molar times the amount of the PES, the amount of hydroxyphenyl end groups can be increased. Further, from Working Example 2 using a water azeotrope solvent, it can be seen that results almost equivalent to those of Working Example 1 can be obtained even if the reaction period is about 2 hours. That is, it can be seen that if a water azeotrope solvent is used to distill out the water in the reaction system, the reaction rate of this invention can be enhanced.
Furthermore, it can be seen that even if DMSO is used as a reaction solvent instead of NMP, results almost

equivalent to those of Working Example 1 can be obtained.

From the results of Working Examples 8 and 9, it can be seen that if sodium hydroxide or calcium hydroxide is used instead of anhydrous potassium carbonate, a tendency of decrease in yield and a tendency of increase in the remaining amount of the metal can be seen, but that in either case, a PES with a high hydroxyphenyl end group content is obtained, and that the thermal stability is excellent while the remaining alkali metal content of the PES is low, showing that the polymer is excellent in thermal stability and polymer purity.

From the results of Working Examples 10 and 11, it can be confirmed that even if bisphenol A or HQ is used as a dihydric phenol compound instead of DHDPS, similar results can be obtained.

On the other hand, when the molar ratio of supplied DCDPS to DHDPS was shifted in Comparative Examples 1 and 2 in which direct polycondensation was performed, hydroxyphenyl end groups increased, but it was found that the content was lower than those of Working Examples 1 through 11, and further that the shifted molar ratio remarkably lowered the molecular weight of the polymer and increased loss in the recovery step, thus remarkably lowering the polymer yield. It can be further seen that thermal stability declined and that the amount of the alkali metal remaining as impurity in the polymer increased. Furthermore, in Comparative Example 3 in which DHDPS was added at the time of terminating the polymerization with an intention to seal the ends, it can be seen that the hydroxyphenyl end groups did not increase even in comparison with Reference Example 3, not allowing the reaction to especially progress.

[Working Examples 12 to 15]

Reactions were performed under the conditions shown in Table 4. A 1-liter four-neck flask equipped with a stirrer, nitrogen introducing tube, thermometer and condenser tube was charged with any one of the PESs (A-2, A-3, A-4 and A-5) (40 g) synthesized in Reference Examples 2 through 5, 0.5 mole of DHDPS or bisphenol-A per 1 mole of the PES, 500 ml of NMP and anhydrous potassium carbonate in an amount almost equimolar to that of DHDPS, and synthesis was performed according to the same procedure as that of Working Example 1. After completion of reaction, the solution was dropped into 5 liters of acid methanol with a concentration of 0.1%, and the precipitated solid was ground and washed with 5 liters of water twice, being dried in vacuum at 130˚C. The results of these working examples are shown in Table 5.

[Working Example 16]

A PES was obtained as described in Working Example 12, except that a 1-liter four-neck flask equipped with a stirrer, nitrogen introducing tube, thermometer, Dean Stark azeotropic distillation apparatus and condenser tube was charged with the PES synthesized in Reference Example 2 (A-2) (40 g), 0.5 mole of DHDPS per 1 mole of the PES, 500 ml of NMP, 50 ml of toluene used as a water azeotrope solvent for removing the water produced in the reaction system, and anhydrous potassium carbonate in an amount almost equimolar to that of DHDPS, that the reaction temperature was raised up to 150˚C, that while water and toluene were removed as an azeotrope, the reaction was performed for 2 hours and terminated. The results are shown in Table 5.

[Working Example 17]

A PES was obtained as described in Working Example 12, except that DMSO was used as a reaction solvent instead of NMP. The results are shown in Table 5.

[Working Examples 18 and 19]

PESs were obtained as described in Working Example 12, except that commercially available PESs (Sumika Excel 3600P and 4800P produced by Sumitomo Chemical Co., Ltd.) were used. The results of these working examples are shown in Table 5.

[Table 4]

Table 4

| | Aromatic polyethersulfone (A) | | Dihydric phenol compound (B) | | (B)/ (A) | Basic compound (D) | | Reaction solvent | Reaction conditions |
|---|---|---|---|---|---|---|---|---|---|
| | Compound | Supplied amount (g) (mmol) | Compound | Supplied amounts (g) (mmol) | Molar ratio | Compound | Supplied amounts (g) (mmol) | | |
| Working Example 12 | A- 2 | 40 (86.1) | DHDPS | 2.10 (8.39) | 0.10 | K2CO3 | 1.20 (8.68) | NMP | 150˚C / 5h |
| Working Example 13 | A- 3 | 40 (86.1) | DHDPS | 2.10 (8.39) | 0.10 | K2CO3 | 1.20 (8.68) | NMP | 150˚C / 5h |
| Working Example 14 | A- 4 | 40 (86.1) | DHDPS | 2.10 (8.39) | 0.10 | K2CO3 | 1.20 (8.68) | NMP | 150˚C / 5h |
| Working Example 15 | A- 5 | 40 (90.4) | bis A | 2.10 (9.20) | 0.10 | K2CO3 | 1.30 (9.41) | NMP | 150˚C / 5h |
| Working Example 16 | A- 2 | 40 (86.1) | DHDPS | 2.10 (8.39) | 0.10 | K2CO3 | 1.20 (8.68) | NMP/ toluene | 150˚C / 5h |
| Working Example 17 | A- 2 | 40 (86.1) | DHDPS | 2.10 (8.39) | 0.10 | K2CO3 | 1.20 (8.68) | DM SO | 150˚C / 5h |
| Working Example 18 | A- 6 | 40 (86.1) | DHDPS | 2.10 (8.39) | 0.10 | K2CO3 | 1.20 (8.68) | NMP | 150˚C / 5h |
| Working Example 19 | A- 7 | 40 (86.1) | DHDPS | 2.10 (8.39) | 0.10 | K2CO3 | 1.20 (8.68) | NMP | 150˚C / 5h |

DHDPS: 4,4' -dihydroxydiphenyl sulfone
bisA: 2,2- bis(4- hydroxyphenyl)propane (bisphenol A)
K2CO3: Anhydrous potassium carbonate

[Table 5]

Table 5

| | Yield (%) | η sp / c | End group rate (mol%) | | Alkali meted cont ent | | 10%weight loss temperature | Tg |
|---|---|---|---|---|---|---|---|---|
| | | | Chlorophenyl end groups | Hydroxyphenyl end groups | Alkali metal | ppm | (˚C) | (˚C) |
| Working Example 12 | 97.2 | 0.25 | 10 | 90 | K | 100 | 500 | 192 |
| Working Example 13 | 95.6 | 0.22 | 10 | 90 | K | 120 | 500 | 185 |
| Working Example 14 | 95.0 | 0.24 | 20 | 80 | K | 110 | 510 | 200 |
| Working Example 15 | 97.1 | 0.40 | 0 | 100 | K | 120 | 488 | 191 |
| Working Example 16 | 98.0 | 0.28 | 0 | 100 | K | 100 | 505 | 192 |
| Working Example 17 | 97.2 | 0.26 | 5 | 95 | K | 90 | 505 | 192 |
| Working Example 18 | 96.0 | 0.20 | 15 | 85 | K | 100 | 505 | 185 |
| Working Example 19 | 97.0 | 0.36 | 20 | 80 | K | 100 | 510 | 214 |

From the results of Working Examples 12 through 15, it can be seen that if a PES different in molecular weight and end group structure (A-2, A-3 or A-4) or a PES consisting of bisphenol A units (A-5), DHDPS or bisphenol-A as a dihydric phenol compound, anhydrous potassium carbonate as a basic compound and NMP as an aprotic polar solvent are used to perform a reaction under a mild condition of 150˚C, hydroxyphenyl end groups can be introduced, and that a polymer with a low alkali metal content can be obtained at a high yield. That is, it can be seen that irrespective of the differences in the molecular weight and end group structure of the PES used as the raw material, a polymer with a high hydrophenyl end group rate can be obtained at a high yield and high purity.
It can be seen that in Working Example 16 using a water azeotrope solvent, results almost equivalent to those of Working Example 12 can be obtained even with a reaction period of about 2 hours, and that if the water in the reaction system is distilled away by azeotrope, the reaction rate of this invention can be enhanced.
Further, even in Working Example 17 in which DMSO is used as a reaction solvent instead of NMP, results almost equivalent to those of Working Example 12 can be obtained.
Furthermore, from the results of Working Examples 18 and 19, it can be seen that even if commercially available PESs produced by a publicly known ordinary polycondensation method are used, similar results can be obtained.

[Working Examples 20 to 23]

A 100 mL three-neck flask equipped with a nitrogen introducing tube, thermometer and Dean Stark azeotropic

distillation apparatus was charged with the PES (A-1), DHDPS and anhydrous potassium carbonate in accordance with the ingredients and amounts shown in Table 6, after they were weighed, and 50 ml of dimethyl sulfoxide (DMSO) dried by keeping a molecular sieve in the solvent one night or more, and 5 ml of toluene as a water azeotrope solvent were added. Under nitrogen flow, a rotator was placed inside to stir the DMSO reaction solution, while the reaction temperature was raised up to 150˚C, water and toluene being removed as an azeotrope, to perform the reaction for 5 hours before terminating the reaction. The reaction solution was added dropwise into 500 ml of 0.1% diluted hydrochloric acid aqueous solution, to obtain a powdery precipitate. It was further washed with 500 ml of water twice and dried in vacuum at 80˚C for 6 hours, to obtain a white fine polymer powder. The results of these working examples are shown in Table 7.

[Working Examples 24 to 31]

A 1-liter four-neck flask equipped with a stirrer, nitrogen introducing tube, thermometer and condenser tube was charged with any one of the PESs synthesized in Reference Examples 2 through 5 (A-2, A-3, A-4 and A-5) or a commercially available PES (Sumika Excel 3600P or 4800P produced by Sumitomo Chemical Co., Ltd.), DHDPS and anhydrous potassium carbonate in accordance with the ingredients and amounts shown in Table 6, after they were weighed, and 400 ml of dimethyl sulfoxide (DMSO) dried by keeping a molecular sieve in the solvent one night or more, and 20 ml of toluene as a water azeotrope solvent were added. Under nitrogen flow, the DMSO reaction solution was stirred, while the reaction temperature was raised up to 150˚C, water and toluene being removed as an azeotrope, to perform the reaction for 5 hours before terminating the reaction.
The reaction solution was added dropwise into 4 liters of 0.1% diluted hydrochloric acid aqueous solution, to obtain a powdery precipitate. The precipitate was further washed with 4 liters of water twice and dried in vacuum at 80˚C for 6 hours, to obtain a white fine polymer powder. The results of these working examples are shown in Table 7.

[Table 6]

Table 6

| | Aromatic polyethersulfone (A) | | Dihydric phenol compound (B) | | (B)/ (A) | Basic compound (D) | | Reaction solvent | Reaction conditions |
|---|---|---|---|---|---|---|---|---|---|
| | Compound | Supplied amount (g) (mmol) | Compound | Supplied amount (g) (mmol) | Molar ratio | Compound | Supplied amount (g) (mmol) | | |
| Working Example 20 | A - 1 | 5.0 (10.7) | DHDPS | 1.25 (4.99) | 0.47 | K2CO3 | 0.70 (5.06) | DM SO/ toluene | 150˚C / 5h |
| Working Example 21 | A - 1 | 5.0 (10.7) | DHDPS | 0.54 (2.16) | 0.20 | K2CO3 | 0.30 (2.17) | DM SO/ toluene | 150˚C / 5h |
| Working Example 22 | A - 1 | 5.0 (10.7) | DHDPS | 0.27 (1.08) | 0.10 | K2CO3 | 0.15 (1.09) | DM SO/ toluene | 150˚C / 5h |
| Working Example 23 | A - 1 | 5.0 (10.7) | DHDPS | 0.05 (0.22) | 0.02 | K2CO3 | 0.03 (0.22) | DM SO/ toluene | 150˚C / 5h |
| Working Example 24 | A - 2 | 40 (86.1) | DHDPS | 2.16 (8.63) | 0.10 | K2CO3 | 1.20 (8.68) | DM SO/ toluene | 150˚C / 5h |
| Working Example 25 | A - 3 | 40 (86.1) | DHDPS | 2.16 (8.63) | 0.10 | K2CO3 | 1.20 (8.68) | DM SO/ toluene | 150˚C / 5h |
| Working Example 26 | A - 4 | 40 (86.1) | DHDPS | 2.16 (8.63) | 0.10 | K2CO3 | 1.20 (8.68) | DM SO/ toluene | 150˚C / 5h |
| Working Example 27 | A - 5 | 40 (86.1) | DHDPS | 2.16 (8.63) | 0.10 | K2CO3 | 1.20 (8.68) | DM SO/ toluene | 150˚C / 5h |
| Working Example 28 | A - 6 | 40 (86.1) | DHDPS | 2.16 (8.63) | 0.10 | K2CO3 | 1.20 (8.68) | DM SO/ toluene | 150˚C / 5h |
| Working Example 29 | A - 7 | 40 (86.1) | DHDPS | 4.32 (17.3) | 0.20 | K2CO3 | 2.46 (17.8) | DM SO/ toluene | 150˚C / 5h |
| Working Example 30 | A - 7 | 40 (86.1) | DHDPS | 2.16 (8.63) | 0.10 | K2CO3 | 1.20 (8.68) | D M SO/ toluene | 150˚C / 5h |

(continued)

| | Aromatic polyethersulfone (A) | | Dihydric phenol compound (B) | | (B)/ (A) | Basic compound (D) | | Reaction solvent | Reaction conditions |
|---|---|---|---|---|---|---|---|---|---|
| | Compound | Supplied amount (g) (mmol) | Compound | Supplied amount (g) (mmol) | Molar ratio | Compound | Supplied amount (g) (mmol) | | |
| Working Example 31 | A - 7 | 40 (86.1) | DHDPS | 0.43 (1.73) | 0.02 | K2CO3 | 0.25 (1.81) | DM SO/ toluene | 150˚C / 5h |

DHDPS: 4,4' dihydroxydiphenyl sulfone
K2CO3: Anhydrous potassium carbonate

[Table 7]

Table 7

| | Yield (%) | η sp/ c | End group rate (mol%) | | Alkali metal content | | 10%weight loss temperature | Tg |
|---|---|---|---|---|---|---|---|---|
| | | | Chlorophenyl end groups | Hydroxyphenyl end groups | Alkali metal | ppm | (˚C) | (˚C) |
| Working Example 20 | 97.8 | 0.27 | 0 | 100 | K | 80 | 471 | 191 |
| Working Example 21 | 98.9 | 0.31 | 0 | 100 | K | 100 | 472 | 185 |
| Working Example 22 | 99.1 | 0.40 | 2 | 98 | K | 70 | 482 | 200 |
| Working Example 23 | 99.5 | 0.45 | 10 | 90 | K | 50 | 495 | 224 |
| Working Example 24 | 97.0 | 0.21 | 3 | 97 | K | 80 | 485 | 192 |
| Working Example 25 | 97.1 | 0.20 | 8 | 92 | K | 80 | 494 | 210 |
| Working Example 26 | 96.7 | 0.21 | 17 | 83 | K | 80 | 502 | 192 |
| Working Example 27 | 98.9 | 0.40 | 0 | 100 | K | 80 | 475 | 185 |
| Working Example 28 | 97.8 | 0.22 | 15 | 85 | K | 100 | 499 | 192 |
| Working Example 29 | 97.5 | 0.31 | 9 | 91 | K | 120 | 494 | 218 |
| Working Example 30 | 98.3 | 0.34 | 18 | 82 | K | 100 | 500 | 192 |
| Working Example 31 | 99.0 | 0.42 | 54 | 46 | K | 100 | 518 | 221 |

From the results of Working Examples 20 through 23 and Working Example 4 through 6, it can be seen that if DMSO is used as a solvent while toluene is added as a water azeotrope solvent, the reaction progresses more. Further, it can be seen that the amount of hydroxyphenyl end groups and the reduced viscosity depend on the added amount of the dihydric phenol, as in Working Examples 1 through 11.

From the results of Working Examples 24 through 31, it can be seen that a polymer with a high hydroxyphenyl end group rate can be obtained at a high yield and high purity irrespective of the differences in the molecular weight and end group structure of the PES used as the raw material as in Working Examples 12 through 15.

From the results of $^1$H-NMR, it could be confirmed that the protons (b) adjacent to the aromatic carbon substituted by chlorine near 7.7 ppm, which were confirmed in the PES of Reference Example 1 used as the raw material were not observed in Working Example 21, and that the protons (a) adjacent to the aromatic carbon substituted by a hydroxyl group near 6.9 ppm increased. (See Fig. 1.)

Production of a PES having hydroxyphenyl end groups (E) using water

[Working Example 32]

A 100 mL four-neck flask equipped with a stirrer, nitrogen introducing tube, thermometer and condenser tube (Dimroth) was charged with water (1.35 g, 75.0 mmol), 50 ml of N-methyl-2-pyrrlidone (NMP) and anhydrous potassium carbonate (0.7 g, 5.06 mmol) per 5 g of the PES (A-1) synthesized in Reference Example 1 (10.7 mmol (calculated from $5/464.53 \times 1000$)), after they were weighed, and the NMP reaction solution was stirred while the reaction temperature was raised up to 150˚C to perform the reaction for 5 hours before terminating the reaction. The reaction solution was added dropwise into 500 ml of acid methanol with a concentration of 0.1%, to precipitate a powder. The powder was washed with 500 ml of water twice and washed with 500 ml of methanol once, being dried in vacuum at 130˚C. The obtained polymer powder was a white powder, and the yield amount was 4.9 g while the yield rate was 97% (the yield rate was calculated from "Recovered PES weight/Supplied PES (A-1) weight × 100) ." The glass transition temperature was 207˚C, and 10% weight loss temperature was 508˚C, the reduced viscosity (ηsp/c) being 0.36. By 400 MHz $^1$H-NMR, it was found that a PES with a chlorophenyl end group/hydroxyphenyl end group ratio of 20/80 (mol%) was obtained. The alkali metal content was 80 ppm. The results are shown in Table 9.

[Working Example 33]

A PES was produced as described in Working Example 32, except that dimethyl sulfoxide (DMSO) was used as a solvent instead of NMP.
The obtained polymer powder was a white powder, and the yield amount was 4.9 g while the yield rate was 97%. The glass transition temperature was 208˚C, and 5% weight loss temperature was 509˚C. The reduced viscosity (ηsp/c) was 0.37. By $^1$H-NMR, it was found that a PES with a chlorophenyl end group/hydroxyphenyl end group ratio of 14/86 (mol%) could be obtained. The alkali metal content was 80 ppm. The results are shown in Table 9.

[Working Example 34]

A PES was produced according to the method as described in Working Example 33, except that the added amounts of water and anhydrous potassium carbonate were changed to conform to the ingredients and amounts shown in Table 8. The results are shown in Table 9.

[Working Examples 35 to 37]

PESs were produced according to the method as described in Working Example 32, except that the added amounts of water and anhydrous potassium carbonate were changed to conform to the ingredients and amounts shown in Table 8 and that the reaction temperature was changed. The results of these working examples are shown in Table 9.

[Working Examples 38 and 39]

PESs were produced according to the method as described in Working Example 32, except that sodium hydroxide or lithium hydroxide was used as an alkali metal salt. The results of these working examples are shown in Table 9.

[Comparative Example 4]

A PES was produced according to the method as described in Working Example 32, except that no alkali metal was added. The results are shown in Table 9.

[Comparative Example 5]

A PES was produced according to the method as described in Working Example 32, except that no water was added. The results are shown in Table 9.

[Table 8]

Table 8

| | Aromatic polyethersulfone (A) | | water (C) | (C)/ (A) | Basic compound (D) | | Reaction solvent | Reaction conditions |
|---|---|---|---|---|---|---|---|---|
| | Compound | Supplied amounts (g) (mmol) | Supplied amount (g) (mmol) | Molar ratio | Compound | Supplied amounts (g) (mmol) | | |
| Working Example 32 | A - 1 | 5.0 (10.7) | 1.35 (75.0) | 7.01 | K2CO3 | 0.70 (5.06) | NMP | 150°C / 5h |
| Working Example 33 | A - 1 | 5.0 (10.7) | 1.35 (75.0) | 7.01 | K2CO3 | 0.70 (5.06) | DM SO | 150°C / 5h |
| Working Example 34 | A - 1 | 5.0 (10.7) | 2.70 (150) | 14.0 | K2CO3 | 0.15 (1.09) | DM SO | 150°C / 5h |
| Working Example 35 | A - 1 | 5.0 (10.7) | 0.27 (15.0) | 1.40 | K2CO3 | 0.28 (2.03) | NMP | 150°C / 5h |
| Working Example 36 | A - 1 | 5.0 (10.7) | 0.27 (15.0) | 1.40 | K2CO3 | 0.28 (2.03) | NMP | 180°C / 5h |
| Working Example 37 | A - 1 | 5.0 (10.7) | 0.27 (15.0) | 1.40 | K2CO3 | 0.28 (2.03) | NMP | 200°C / 5h |
| Working Example 38 | A - 1 | 5.0 (10.7) | 1.35 (75.0) | 7.01 | NaOH | 0.20 (5.00) | NMP | 150°C / 5h |
| Working Example 39 | A - 1 | 5.0 (10.7) | 1.35 (75.0) | 7.01 | LOH | 0.12 (5.01) | NMP | 150°C / 5h |
| Comparative Example 4 | A - 1 | 5.0 (10.7) | 1.35 (75.0) | 7.01 | - | - | NMP | 150°C / 5h |
| Comparative Example 5 | A - 1 | 5.0 (10.7) | - | - | K2CO3 | 0.70 (5.06) | NMP | 150°C / 5h |

K2CO3: Anhydrous potassium carbonate
NaOH: Sodium hydroxide
LiOH: Lithium hydroxide

[Table 9]

Table 9

| | Yield (%) | | End group rate (mol%) | | Alkali metal content | | 10%weight loss temperature | Tg |
|---|---|---|---|---|---|---|---|---|
| | | ηsp/c | Chlorophenyl end groups | Hydroxyphenyl end groups | Alkali metal | ppm | (˚C) | (˚C) |
| Working Example 32 | 97.1 | 0.36 | 20 | 80 | K | 80 | 508 | 207 |
| Working Example 33 | 97.7 | 0.37 | 14 | 86 | K | 80 | 509 | 208 |
| Working Example 34 | 95.8 | 0.33 | 8 | 92 | K | 30 | 508 | 210 |
| Working Example 35 | 98.1 | 0.48 | 34 | 66 | K | 50 | 510 | 226 |
| Working Example 36 | 94.2 | 0.29 | 29 | 71 | K | 20 | 502 | 208 |
| Working Example 37 | 69.2 | 0.20 | 18 | 82 | K | 20 | 499 | 184 |
| Working Example 38 | 97.2 | 0.49 | 38 | 62 | Na | 100 | 510 | 226 |
| Working Example 39 | 97.4 | 0.46 | 33 | 67 | Li | 100 | 510 | 228 |
| Comparative Example 4 | 99.4 | 0.58 | 100 | 0 | - | - | 510 | 230 |
| Comparative Example 5 | 99.3 | 0.58 | 100 | 0 | K | 50 | 510 | 230 |

From Working Examples 32 through 39, it can be seen that if the PES (A-1), water (C) and a basic compound (D) are used to perform a reaction in an aprotic polar solvent, hydroxyphenyl end groups can be introduced in response to the added amount of water, and that a polymer with a low alkali metal content can be obtained at a high recovery rate.

From the results of Working Examples 32 through 35, it can be seen that the amount of hydroxyphenyl end groups can be increased with the added amount of water kept in a range from 1.4 to 14.0 molar times the amount of the PES. Further, it can be seen that even if DMSO is used as a reaction solvent instead of NMP, almost the same results can be obtained.

From the results of Working Examples 35 through 37, it can be seen that at a reaction temperature of 200˚C, the yield declines, but that at the high reaction temperature, reactivity tends to rise, and therefore that a PES with a high hydroxyphenyl end group content can be obtained even if the added amounts of water and basic compound are smaller than those used in the case of 150˚C.

From the results of Working Examples 38 and 39, it can be seen that if sodium hydroxide or lithium hydroxide is used instead of anhydrous potassium carbonate, a tendency of decrease in reactivity and a tendency of increase in the amount of the remaining metal can be observed, but that in either case, a PES with a hydroxyphenyl end group rate of 60% or more can be obtained, and that a polymer with a low remaining alkali metal content and excellent in thermal stability and polymer purity can be obtained.

On the other hand, from the results of Comparative Examples 4 and 5, it can be seen that if water or the basic compound is not added, the reaction does not progress at all.

[Working Examples 40 to 44]

Reactions were performed under the conditions shown in Table 10. A 1-liter four-neck flask equipped with a stirrer, nitrogen introducing tube, thermometer and condenser tube (Dimroth) was charged with any one of PESs synthesized in Reference Examples 1 through 5 (A-1, A-2, A-3, A-4 and A-5) (50 g), water (13.5 g) (7.0 moles per 1 mole of the PES), 500 ml of DMSO and anhydrous potassium carbonate (7.0 g)(0.07 mole per 1 mole of water), and a reaction was performed according to the procedure as described in Working Example 32. After completion of reaction, the solution was dropped into 5 liters of acid methanol with a concentration of 0.1%, and the precipitated solid was ground and washed with 5 liters of water twice, being dried in vacuum at 130˚C. The results of these working examples are shown in Table 11.

[Working Example 45]

A PES was produced according to the method as described in Working Examples 40 to 44, except that a commercially available PES (Sumika Excel 3600P produced by Sumitomo Chemical Co., Ltd.) was used and that NMP was used as a reaction solvent instead of DMSO. The results are shown in Table 11.

[Working Example 46]

A PES was produced according to the method as described in Working Example 45, except that a commercially available PES (Sumika Excel 4800P produced by Sumitomo Chemical Co., Ltd.) was used and that the reaction temperature was 180˚C.

[Table 10]

Table 10

| | Aromatic polyethersulfone (A) | | water (C) | (C)/(A) | Basic compound (D) | | Reaction solvent | Reaction conditions |
|---|---|---|---|---|---|---|---|---|
| | Compoun d | Supplied amount (g) (mmol) | supplied amount (g) (mmol) | Molar ratio | Compound | Supplied amount (g) (mmol) | | |
| Working Example 40 | A - 1 | 50 (107.6) | 13.5 (750.0) | 6.97 | K2CO3 | 7.0 (50.6) | DMSO | 150˚C/ 5h |
| Working Example 41 | A - 2 | 50 (107.6) | 13.5 (750.0) | 6.97 | K2CO3 | 7.0 (50.6) | DMSO | 150˚C/ 5h |
| Working Example 42 | A - 3 | 50 (107.6) | 13.5 (750.0) | 6.97 | K2CO3 | 7.0 (50.6) | DMSO | 150˚C/ 5h |
| Working Example 43 | A - 4 | 50 (107.6) | 13.5 (750.0) | 6.97 | K2CO3 | 7.0 (50.6) | DMSO | 150˚C/ 5h |
| Working Example 44 | A - 5 | 50 (113.0) | 13.5 (750.0) | 6.64 | K2CO3 | 7.0 (50.6) | DMSO | 150˚C/ 5h |
| Working Example 45 | A - 6 | 50 (107.6) | 13.5 (750.0) | 6.97 | K2CO3 | 7.0 (50.6) | NMP | 150˚C/ 5h |

(continued)

| | Aromatic polyethersulfone (A) | | water (C) | (C)/(A) | Basic compound (D) | | Reaction solvent | Reaction conditions |
|---|---|---|---|---|---|---|---|---|
| | Compound | Supplied amount (g) (mmol) | supplied amount (g) (mmol) | Molar ratio | Compound | Supplied amount (g) (mmol) | | |
| Working Example 46 | A - 7 | 50 (107.6) | 13.5 (750.0) | 6.97 | K2CO3 | 7.0 (50.6) | NMP | 180˚C/ 5h |
| K2CO3: Anhydrous potassium carbonate | | | | | | | | |

[Table 11]

Table 11

| | Yield | η sp/ c | End group rate (mol%) | | Alkali metal content | | 10%weight loss temperature | Tg |
|---|---|---|---|---|---|---|---|---|
| | (%) | | Chlorophenyl end groups | Hydroxyphenyl end groups | Alkali metal | ppm | (˚C) | (˚C) |
| Working Example 40 | 97.2 | 0.37 | 15 | 85 | K | 90 | 508 | 208 |
| Working Example 41 | 97.0 | 0.23 | 20 | 80 | K | 100 | 500 | 189 |
| Working Example 42 | 97.1 | 0.22 | 7 | 93 | K | 100 | 500 | 186 |
| Working Example 43 | 96.8 | 0.23 | 38 | 62 | K | 100 | 501 | 192 |
| Working Example 44 | 96.5 | 0.33 | 22 | 78 | K | 110 | 481 | 208 |
| Working Example 45 | 97.0 | 0.23 | 36 | 64 | K | 110 | 501 | 190 |
| Working Example 46 | 94.5 | 0.30 | 24 | 76 | K | 120 | 505 | 207 |

From the results of Working Examples 40 through 44, it can be seen that if a PES different in molecular weight and end group structure (A-1, A-2, A-3 or A-4) or a PES consisting of bisphenol-A units (A-5) is used to perform a reaction with water and a basic compound in an aprotic polar solvent, hydroxyphenyl end groups can be introduced under a mild condition of 150 to 180˚C, and that a polymer with a low alkali metal content can be obtained at a high yield. That is, it can be seen that irrespective of the differences in the molecular weight and the end group structure of the PES used as the raw material, a polymer with a high hydroxyphenyl end group rate can be obtained at a high yield and high purity.

Further, from the results of Working Examples 45 and 46, it can be seen that even if a commercially available PES produced by a publicly known ordinary polycondensation method is used, similar results can be obtained.

[Working Examples 47 to 54]

A 1-liter four-neck flask equipped with a stirrer, nitrogen introducing tube, thermometer and condenser tube (Dimroth) was charged with a PES, water and anhydrous potassium carbonate to conform to the ingredients and amounts shown in Table 12, after they were weighed, and 400 ml of dimethyl sulfoxide (DMSO) dried by keeping a molecular

sieve in the solvent one night or more was added. Under nitrogen flow, the DMSO reaction solution was stirred while the reaction temperature was raised up to 150˚C, to perform a reaction for 5 hours before terminating the reaction. The reaction solution was added dropwise into 4 liters of 0.1% diluted hydrochloric acid aqueous solution, to obtain a powdery precipitate. The precipitate was washed with 4 liters of water twice and dried in vacuum at 80˚C for 6 hours, to obtain a white fine polymer powder.
The results of these working examples are shown in Table 13.

[Table 12]

Table 12

| | Aromatic polyethersulfone (A) | | water (C) | (C)/(A) | Basic compound (D) | | Reaction solvent | Reaction conditions |
|---|---|---|---|---|---|---|---|---|
| | Compound | Supplied amount (g) (mmol) | Supplied amount (g) (mmol) | Molar ratio | Compound | Supplied amount (g) (mmol) | | |
| Working Example 47 | A - 1 | 50 (107) | 2.7 (150) | 1.40 | K2CO3 | 2.8 (20.3) | DM SO | 150˚C / 5 h |
| Working Example 48 | A - 1 | 50 (107) | 13.5 (750) | 7.01 | K2CO3 | 14.0 (101) | DM SO | 150˚C / 5 h |
| Working Example 49 | A - 1 | 50 (107) | 27.0 (1500) | 14.0 | K2CO3 | 29.0 (210) | DM SO | 150˚C / 5 h |
| Working Example 50 | A - 4 | 50 (107) | 2.7 (150) | 14.0 | K2CO3 | 2.8 (20.3) | DM SO | 150˚C / 5 h |
| Working Example 51 | A - 7 | 50 (107) | 0.6 (33.3) | 0.32 | K2CO3 | 0.5 (3.62) | DM SO | 150˚C / 5 h |
| Working Example 52 | A - 7 | 50 (107) | 13.5 (750) | 7.01 | K2CO3 | 14.0 (101) | DM SO | 150˚C / 5 h |
| Working Example 53 | A - 7 | 50 (107) | 27.0 (1500) | 14.0 | K2CO3 | 29.0 (210) | DM SO | 150˚C / 5 h |
| Working Example 54 | A - 7 | 50 (107) | 50.0 (2778) | 26.0 | K2CO3 | 50.0 (362) | DM SO | 150˚C / 5 h |
| K2CO3: Anhydrous potassium carbonate | | | | | | | | |

[Table 13]

Table 13

| | Yield (%) | η sp/ c | End group rate (mol%) | | Alkali metal content | | 10%weight loss temperature | Tg |
|---|---|---|---|---|---|---|---|---|
| | | | Chlorophenyl end groups | Hydroxyphenyl end groups | Alkali metal | ppm | (˚C) | (˚C) |
| Working Example 47 | 98.0 | 0.50 | 33 | 67 | K | 20 | 510 | 207 |
| Working Example 48 | 98.2 | 0.39 | 8 | 92 | K | 50 | 480 | 208 |
| Working Example 49 | 97.8 | 0.32 | 6 | 94 | K | 80 | 473 | 210 |
| Working Example 50 | 97.1 | 0.27 | 33 | 67 | K | 80 | 508 | 226 |
| Working Example 51 | 99.0 | 0.43 | 87 | 13 | K | 20 | 523 | 228 |
| Working Example 52 | 98.7 | 0.32 | 43 | 57 | K | 50 | 512 | 223 |
| Working Example 53 | 98.8 | 0.28 | 35 | 65 | K | 100 | 508 | 226 |
| Working Example 54 | 98.5 | 0.25 | 24 | 76 | K | 100 | 497 | 211 |

From the results of Working Examples 47 through 54 and Working Examples 35 through 37, it can be seen that irrespective of the differences in the molecular weight and end group structure of the PES used as the raw material, a polymer with a high hydroxyphenyl end group rate can be obtained at a high yield and high purity.

From the results of $^1$H-NMR, the protons (b) adjacent to the aromatic carbon substituted by chlorine near 7.7 ppm confirmed in the PES of Reference Example 1 used as the raw material could be slightly observed in Working Example 48 after completion of reaction, and the protons (a) adjacent to the aromatic carbon substituted by a hydroxyl group near 6. 9 ppm could be confirmed to have increased. (See Fig. 2.)

Some differences between the results of Working Examples 32 through 39 and the results of Working Examples 47 through 54 are considered to be attributable to the DMSO dried by a molecular sieve one night or more used as the solvent in Working Examples 47 to 54.

<u>Production of particles of a PES having hydroxyphenyl end groups (E)</u>

[Working Example 55]

A 100 ml four-neck flask equipped with a stirrer, nitrogen introducing tube, thermometer and condenser tube (Dimroth) was charged with 1.25 g of 4,4'-dihydroxydiphenyl sulfone (DHDPS), 50 ml of N-methyl-2-pyrrolidone (NMP) and 0. 70 g of anhydrous potassium carbonate per 5.00 g of a PES (Sumika Excel 4800P produced by Sumitomo Chemical Co., Ltd.), after they were weighed, and the NMP reaction solution was stirred while the reaction temperature was raised to 150˚C, to perform a reaction for 5 hours before terminating the reaction. The solution was cooled to room temperature, and 2.00 g of polyvinyl alcohol (PVA) (Gosenol GL-05 produced by Nippon Synthetic Chemical Industry Co., Ltd., number average molecular weight 8000) was added. The mixture was stirred at a temperature of 60˚C for 2

hours, to obtain a suspension. It was cooled to room temperature, and 50 g of water was added at a flow rate of 1 g/min. The obtained slurry solution was filtered, and the residue was washed with 100 g of water three times. Then, at a temperature of 80˚C, it was dried in vacuum to obtain 4.10 g of PES particles. By $^1$H-NMR, no chlorophenyl end groups were confirmed, and the hydroxyphenyl end group rate was 100 mol%. The number average particle size was 27 μm, and the volume average particle size was 44 μm, the particle size distribution being 1.62. The alkali metal content was 80 ppm. The results are shown in Tables 14 and 15.

[Working Example 56]

PES particles were produced according to the method as described in Working Example 55, except that 1.35 g of water was used instead of 4,4'-dihydroxydiphenyl sulfone. By 400 MHz $^1$H-NMR, the chlorophenyl end group/hydroxyphenyl end group ratio was found to be 20/80 (mol%). The number average particle size was 24 μm, and the volume average particle size was 42 μm, the average particle size distribution being 1.75. The alkali metal content was 80 ppm. The results are shown in Table 15.

[Working Example 57]

PES particles were produced according to the method as described in Working Example 55, except that 0.10 g of 4,4'-dihydroxydiphenyl sulfone and 0.06 g of anhydrous potassium carbonate were used. By 400 MHz $^1$H-NMR, the chlorophenyl end group/hydroxyphenyl end group ratio was found to be 38/62 (mol%). The number average particle size was 26 μm, and the volume average particle size was 45 μm, the particle size distribution being 1.73. The alkali metal content was 30 ppm. The results are shown in Table 15.

[Working Example 58]

PES particles were produced as described in Working Example 55, except that dimethyl sulfoxide (DMSO) was used as a solvent instead of N-methyl-2-pyrrolidone (NMP) and that the amount of polyvinyl alcohol (PVA) was changed to 5.00 g. By 400 MHz $^1$H-NMR, the chlorophenyl end group/hydroxyphenyl end group ratio was found to be 0/100 (mol%). The number average particle size was 17 μm, and the volume average particle size was 20 μm, the particle size distribution being 1.18. The alkali metal content was 90 ppm. The results are shown in Table 15. A scanning electron microscope photo of the obtained particles is shown in Fig. 3.

[Working Example 59]

Mixed were 5.00 g of the PES particles obtained in Working Example 58 and 0.54 g of 35% hydrochloric acid in 100 g of methanol, and the mixture was stirred for 1 hour. Then, at a temperature of 80˚C, it was dried in vacuum, to obtain 4.10 g of PES particles. By 400 MHz $^1$H-NMR, the chlorophenyl end group/hydroxyphenyl end group ratio was found to be 0/100 (mol%). The number average particle size was 17 μm, and the volume average particle size was 20 μm, the particle size distribution being 1.18. The alkali metal content was 20 ppm. The results are shown in Table 15.

[Comparative Example 6]

PES particles were produced according to the method as described in Working Example 55, except that no anhydrous potassium carbonate was added. By 400 MHz $^1$H-NMR, the chlorophenyl end group/hydroxyphenyl end group ratio was found to be 100/0 (mol%). The number average particle size was 29 μm, and the volume average particle size was 45 μm, the particle size distribution being 1.55. The alkali metal content was 16 ppm. The results are shown in Table 15.

[Comparative Example 7]

PES particles were produced according to the method as described in Working Example 55, except that no 4,4'-dihydroxydiphenyl sulfone was added. By 400 MHz $^1$H-NMR, the chlorophenyl end group/hydroxyphenyl end group ratio was found to be 100/0 (mol%). The number average particle size was 29 μm, and the volume average particle size was 46 μm, the particle size distribution being 1.59. The alkali metal content was 400 ppm. The results are shown in Table 15.

[Comparative Example 8]

It was tried to produce PES particles according to the method as described in Working Example 1, except that no polyvinyl alcohol (PVA) was added. The obtained PES was not fine particles, but coarse cohesive particles of 1 mm or more. By 400 MHz $^1$H-NMR, the chlorophenyl end group/hydroxyphenyl end group ratio was found to be 0/100 (mol%). The alkali metal content was 500 ppm. The results are shown in Table 15.

[Comparative Example 9]

A 100 mL four-neck flask equipped with a stirrer, nitrogen introducing tube, thermometer and condenser tube (Dimroth) was charged with 5.00 g of a PES (Sumika Excel 4800P produced by Sumitomo Chemical Co., Ltd.), 2.00 g of polyvinyl alcohol (PVA) (Gosenol GL-05 produced by Nippon Synthetic Chemical Industry Co., Ltd., number average molecular weight 8000) and 50 ml of N-methyl-2-pyrrolidone (NMP), after they were weighed, and at a temperature of 60˚C, the mixture was stirred for 2 hours, to obtain a suspension. It was cooled to room temperature, and 50 g of water was added at a flow rate of 1 g/min. The obtained slurry solution was filtered, and the residue was washed with 100 g of water three times and dried in vacuum at a temperature of 80˚C, to obtain 4.00 g of PES particles. By 400 MHz $^1$H-NMP, the chlorophenyl end group/hydroxyphenyl end group ratio was found to be 100/0 (mol%). The number average particle size was 31 μm, and the volume average particle size was 48 μm, the particle size distribution being 1.55. The alkali metal content was 14 ppm. The results are shown in Table 15.

[Table 14]

Table 14

| | Aromatic polyethersulfone (A) | | Dihydric phenol compound (B) | | water (C) | Basic compound (D) | | Reaction solvent | Reaction conditions |
|---|---|---|---|---|---|---|---|---|---|
| | Compou nd | Supplied amount (g) (mmol) | Compoun d | Supplied amount (g) (mmol) | Supplied amount (g) (mmol) | Compound | Supplied amount (g) (mmol) | | |
| Working Example 55 | A - 1 | 5.0 (10.7) | DHDPS | 1.25 (4.99) | - | K2CO3 | 0.70 (5.06) | NMP | 150°C / 5h |
| Working Example 56 | A - 1 | 5.0 (10.7) | DHDPS | - | 1.35 (75.0) | K2CO3 | 0.70 (5.06) | NMP | 150°C / 5h |
| Working Example 57 | A - 1 | 5.0 (10.7) | DHDPS | 0.10 (0.40) | - | K2CO3 | 0.06 (0.43) | NMP | 150°C / 5h |
| Working Example 58 | A - 1 | 5.0 (10.7) | DHDPS | 1.25 (4.99) | - | K2CO3 | 0.70 (5.06) | DM SO | 150°C / 5h |
| Working Example 59 | A - 1 | 5.0 (10.7) | DHDPS | 1.25 (4.99) | - | K2CO3 | 0.70 (5.06) | DM SO | 150°C / 5h |
| Comparative Example 6 | A - 1 | 5.0 (10.7) | DHDPS | 1.25 (4.99) | - | K2CO3 | - | NMP | 150°C / 5h |
| Comparative Example 7 | A - 1 | 5.0 (10.7) | DHDPS | | - | K2CO3 | 0.70 (5.06) | NMP | 150°C / 5h |
| Comparative Example 8 | A - 1 | 5.0 (10.7) | DHDPS | 1.25 (4.99) | - | K2CO3 | 0.70 (5.06) | NMP | 150°C / 5h |
| Comparative Example 9 | A - 1 | 5.0 (10.7) | DHDPS | - | - | K2CO3 | - | DM SO | 150°C / 5h |

DHDPS: 4,4' -dihydroxydiphenyl sulfone
K2CO3: Anhydrous potassium carbonate

[Table 15]

Table 15

| | Surfactant PVA (g) | Acid contact | End group rate (mol%) | | Average particle size (mm) | | Particle size distribution | Alkali metal content |
|---|---|---|---|---|---|---|---|---|
| | | | Chlorophenyl end groups | Hydroxyphenyl end groups | Number average | Volume average | | (ppm) |
| Working Example 55 | 2.0 | × | 0 | 100 | 27 | 44 | 1.62 | 80 |
| Working Example 56 | 2.0 | × | 20 | 80 | 24 | 42 | 1.75 | 80 |
| Working Example 57 | 2.0 | × | 38 | 62 | 26 | 45 | 1.73 | 30 |
| Working Example 58 | 5.0 | × | 0 | 100 | 17 | 20 | 1.18 | 90 |
| Working Example 59 | 5.0 | ○ | 0 | 100 | 17 | 20 | 1.18 | 20 |
| Comparative Example 6 | 2.0 | × | 100 | 0 | 29 | 45 | 1.55 | 16 |
| Comparative Example 7 | 2.0 | × | 100 | 0 | 29 | 46 | 1.59 | 400 |
| Comparative Example 8 | - | × | 0 | 100 | Unmea (> 1 surable mm) | | - | 500 |
| Comparative Example 9 | 2.0 | × | 100 | 0 | 31 48 | | 1.55 | 14 |

Alloying a PES having hydroxyphenyl end groups (E) and a thermoplastic resin

[Working Examples 60 to 68 and Comparative Examples 10 to 12]

As thermoplastic resins to be alloyed, the following three polymers were used.

- Polyethylene terephthalate resin of Tm = 255˚C, Tmc = 178˚C and intrinsic viscosity 1.15 (phenol/tetrachloroethane = 5/5 (V/V), 25˚C) (T704T produced by Toray Industries, Inc.) (hereinafter abbreviated as PET)
- Polybutylene terephthalate resin of Tm = 226˚C and intrinsic viscosity 0.85 (1100S produced by Toray Industries, Inc.) (hereinafter abbreviated as PBT)
- Nylon 6 resin of Tm = 225˚C and relative viscosity 2.80 in 98% sulfuric acid at 1g/dl (CM1010 produced by Toray Industries, Inc.) (hereinafter abbreviated as N6)

Under the conditions shown in Table 16, 5 g of any one of the PESs synthesized in Working Examples 1, 4, 5, 24 and 40 and Comparative Examples 1 through 3 and 45 g of any one of the aforementioned thermoplastic resins were melt-mixed at a predetermined temperature for 15 minutes using a small Brabender produced by Toyo Seiki Seisaku-sho Ltd., to obtain a composition. The composition was pelletized.

The morphology of the PES in the thermoplastic resin matrix was observed using a transmission electron microscope (Hitachi Electron Microscope H-700). The morphology of a cross section of an obtained resin composition pellet was observed, and the longest particle sizes of individual dispersed spherical particles on a photo were measured and number-averaged to obtain a number average particle size.

The results of the respective examples are shown in Table 16. From the alloying results of Working Examples 60 through 68 and Comparative Examples 10 through 12, it can be seen that the PES having hydroxyphenyl end groups (E) obtained by the method of this invention is suitable for being alloyed with a thermoplastic resin such as a polyester like PET or PBT and a nylon. The reason why higher dispersibility is obtained in Working Examples 62, 65 and 68 is considered to be that the effect of fine powdering by the reprecipitation recovery performed in Working Example 24 contributed to the higher dispersibility.

[Table 16]

Table 16

| | Thermoplastic resin | | Aromatic polyethersulfone (E) | | Melt kneading temperature ˚C | Melt kneading state | Dispersed particle size |
|---|---|---|---|---|---|---|---|
| | Compound | Mixed amount (g) | Synthesis example | Mixed amount (g) | | | µm |
| Worki ng Example 60 | PET | 45 | Synthesized product of Working Example 1 | 5.0 | 280 | Without torque drop | 5 |
| Working Example 61 | PET | 45 | Synthesized product of Working Example 40 | 5.0 | 280 | Without torque drop | 4 |
| Comparative Example 10 | PET | 45 | Synthesized product of Comparative Example 1 | 5.0 | 280 | With torque drop | 30 |
| Working Example 62 | PET | 45 | Synthesized product of Working Example 24 | 5.0 | 280 | Without torque drop | 0.3 |

(continued)

| | Thermoplastic resin | | Aromatic polyethersulfone (E) | | Melt kneading temperature ˚C | Melt kneading state | Dispersed particle size |
|---|---|---|---|---|---|---|---|
| | Compound | Mixed amount (g) | Synthesis example | Mixed amount (g) | | | µm |
| Working Example 63 | PBT | 45 | Synthesized product of Working Example 4 | 5.0 | 250 | Without torque drop | 3 |
| Working Example 64 | PBT | 45 | Synthesized product of Working Example 40 | 5.0 | 250 | Without torque drop | 2 |
| Comparative Example 11 | PBT | 45 | Synthesized product of Comparative Example 2 | 5.0 | 250 | With torque drop | 25 |
| Worki ng Example 65 | PBT | 45 | Synthesized product of Working Example 24 | 5.0 | 250 | Without torque drop | 0.3 |
| Working Example 66 | N6 | 45 | Synthesized product of Working Example 5 | 5.0 | 250 | Without torque drop | 5 |
| Worki ng Example 67 | N6 | 45 | Synthesized product of Working Example 40 | 5.0 | 250 | Without torque drop | 4 |
| Comparative Example 12 | N6 | 45 | Synthesized product of Comparative Example 3 | 5.0 | 250 | With torque drop | 30 |
| Working Example 68 | N6 | 45 | Synthesized product of Working Example 24 | 5.0 | 250 | Without torque drop | 0.2 |

Alloying a PES having hydroxyphenyl end groups (E) and a thermosetting resin

[Working Examples 69 to 75 and Comparative Examples 13 and 14]

Tetraglycidyl diamino diphenyl methane (Epikote 604) (produced by Japan Epoxy Resin Co., Ltd.) as an epoxy resin and one of the PESs shown in Table 17 were heated and mixed in a kneader at 130˚C in Working Example 69, 72 or 73. Then, the obtained mixture was cooled to 80˚C, and 4,4'-diaminodiphenyl sulfone (hereinafter abbreviated as DDS) as a curing agent was mixed at the rate shown in Table 17. The mixture was mixed thoroughly to obtain an epoxy resin composition. The obtained epoxy resin composition was made to react in a heating furnace at 180˚C for 2 hours, for being cured, to obtain a cured epoxy resin. In working Example 70, 71, 74 or 75, both the ingredients were heated in a test tube to 130˚C, and mixed for 3 hours or more, to be homogeneous. The obtained mixture was cooled to 80˚C, and 4,4'-diaminodiphenyl sulfone (hereinafter abbreviated as DDS) as a curing agent was added at the rate shown in Table 17. The mixture was kneaded at 2000 rpm for 3 minutes using a defoaming kneader (Awatori Rentaro ARV-310 produced by Thinky Corporation), and subsequently the mixture was defoamed under reduced pressure at 0.6 KPa

while being homogeneously mixed at 2000 rpm for 5 minutes, to obtain an epoxy resin composition. The obtained epoxy resin composition was made to react in a heating furnace at 180˚C for 2 hours, for being cured to obtain a cured epoxy resin. The average particle size of the PES finely dispersed in the epoxy resin was measured by the same method as that of Working Example 60. The results are shown in Table 17.

[Table 17]

Table 17

| | Epoxy resin | Aromatic polyethersulfone (E) | | | | Curing agent | Dispersed particle size |
|---|---|---|---|---|---|---|---|
| | (Epikote 604) (g) | Synthesis example | Hydroxyphenyl end groups (mol%) | η sp / c | Mixed amount (g) | Added amount of 4,4' - DDS (g) | μm |
| Working Example 69 | 100 | Synthesized product of Working Example 12 | 90 | 0.25 | 40 | 45 | 5 |
| Working Example 70 | 100 | Synthesized product of Working Example 30 | 82 | 0.34 | 40 | 45 | Less than 10 nm |
| Working Example 71 | 100 | Synthesized product of Working Example 31 | 46 | 0.42 | 40 | 45 | 100 nm |
| Working Example 72 | 100 | Synthesized product of Working Example 40 | 85 | 0.37 | 40 | 45 | 2 |
| Working Example 73 | 100 | Synthesized product of Working Example 43 | 62 | 0.23 | 40 | 45 | 11 |
| Working Example 74 | 100 | Synthesized product of Working Example 48 | 92 | 0.39 | 40 | 45 | Less than 10 nm |
| Working Example 75 | 100 | Synthesized product of Working Example 52 | 57 | 0.32 | 40 | 45 | 30 - 40 nm |
| Comparative Example 13 | 100 | Synthesized product of Comparative Example 1 | 40 | 0.23 | 40 | 45 | 20 |
| Comparative Example 14 | 100 | Reference Example 7 | 0 | 0.48 | 40 | 45 | Not dispersed |

It can be see that the cured epoxy resins obtained by using the PESs having hydroxyphenyl end groups in

Working Example 69 through 75 have the PESs more finely dispersed in the epoxy resins compared with the PES with less hydroxyphenyl end groups of Comparative Example 13 and the PES without the hydroxyphenyl end groups of Comparative Example 14. Further, it can be seen that when the rate of hydroxyphenyl end groups is larger and when the molecular weight is lower, the PES is more finely dispersed. The reason why the fine dispersibility in Working Examples 70, 71, 74 and 75 is very higher than the fine dispersibility in Working Examples 69, 72 and 73 is considered to be that the effect of the fine powdering by the reprecipitation recovery performed in Working Examples 47 through 54 and the defoaming kneading condition after addition of the curing agent contributed to the higher fine dispersibility.

The results of observation of cross sections of obtained epoxy resin compositions using a transmission electron microscope are shown in Fig. 4 (Comparative Example 14 using the PES with a hydroxyphenyl group rate of 0% obtained in Reference Example 7), Fig. 5 (Working Example 71 using the PES with a hydroxyphenyl group rate of 46% obtained in Working Example 31), Fig. 6 (Working Example 70 using the PES with a hydroxyphenyl group rate of 82% obtained in Working Example 30), Fig. 7 (Working Example 75 using the PES with a hydroxyphenyl group rate of 57% obtained in Working Example 52) and Fig. 8 (Working Example 74 using the PES with a hydroxyphenyl group rate of 92% obtained in Working Example 47).

In the drawings, white portions indicate an epoxy resin and black portions indicate a PES. In Comparative Example 14 in which a PES free from hydroxyphenyl end groups was kneaded, the state where the PES is not dispersed but is separated in phase can be observed. On the contrary, it can be seen that in Working Example 71, the PES is finely dispersed with an average particle size of 100 nm and that in Working Example 70, the PES is finely dispersed with an average particle size of 10 nm or less. Further, in Working Example 75, the PES is finely dispersed with a particle size of 30 to 40 nm, and it is considered that since the amount of the hydroxyphenyl is larger than that of Working Example 71, higher dispersibility is obtained. In Working Example 74, it can be seen that the PES is dispersed with a particle size of 10 nm or less as in Working Example 70.

Alloying a PES having hydroxyphenyl end groups (E) and a thermosetting resin

[Working Example 76]

A test tube with a stirrer was charged with 100 g of tetraglycidyl diamino diphenyl methane (Epikote 604) (produced by Japan Epoxy Resin Co., Ltd.) as an epoxy resin and 40 g of the PES particles synthesized in Working Example 55, and the epoxy resin composition was heated to 140˚C and stirred for 1 hour or for 3 hours. The PES particle sizes achieved after stirring for 1 hour and 3 hours were measured using a transmission electron microscope. The results are shown in Table 18.

[Working Example 77]

The particle sizes were measured according to the method as described in Working Example 76, except that the PES particles synthesized in Working Example 58 were used instead of the PES particles synthesized in Working Example 55.

[Comparative Example 15]

The particle sizes were measured according to the method as described in Working Example 76, except that the PES particles synthesized in Comparative Example 8 were used instead of the PES particles synthesized in Working Example 55.

[Comparative Example 16]

The particle sizes were measured according to the method as described in Working Example 76, except that the PES particles synthesized in Comparative Example 9 were used instead of the PES particles synthesized in Working Example 55.

[Table 18]

Table 18

| | Epoxy resin | Aromatic polyethersulfone (E) | | Dispersed particle size (μm) | |
|---|---|---|---|---|---|
| | (Epikote 604) (g) | Synthesis example | Mixed amount (g) | 1 hour | 3 hours |
| Working Example 76 | 100 | Synthesized product of Working Example 55 | 40 | 1 | <0.1 |
| Working Example 77 | 100 | Synthesized product of Working Example 58 | 40 | <0.1 | <0.1 |
| Comparative Example 15 | 100 | Synthesized product of Comparative Example 8 | 40 | >100 | >100 |
| Comparative Example 16 | 100 | Synthesized product of Comparative Example 9 | 40 | 30 | 30 |

In Working Examples 76 and 77 having hydroxyphenyl end groups, it can be seen that PES particles are dissolved to 0.1 μm or less in the epoxy. Further in Working Example 77 narrow in particle size distribution, since the speed to reach 0.1 μm or less is faster, it can be seen that there is an effect of enhancing productivity due to a shorter kneading time, etc.

On the other hand, in Comparative Example 15 using a PES having hydroxyphenyl end groups which is not fine particles and in Comparative Example 16 using a PES having chlorophenyl end groups which is fine particles, it can be seen that the speed of dissolving the PES into the epoxy is very slow.

From the above results, it can be seen that if the hydroxyphenyl end group rate of the PES is larger, the dispersibility at the time of alloying can be enhanced, allowing both the ingredients to be homogeneously kneaded at the time of kneading, to further enhance dispersibility. Further, if the PES is presented as fine particles, a tendency of achieving more homogeneously fine dispersion can be seen at the time of alloying, and it can be seen that the particles are suitable as a material for alloying a thermoplastic resin or thermosetting resin.

[Industrial applicability]

If the PES per se of this invention is molded, it can be widely used as electric and electronic parts, automobile parts, aircraft parts, medical instrument parts, etc., and the PES can also be mixed with a thermoplastic resin or thermosetting resin as a modifier of the thermoplastic resin or thermosetting resin.

## Claims

1. A method for producing an aromatic polyethersulfone having hydroxyphenyl end groups (E) comprising the step of heating an aromatic polyethersulfone (A) with a structure represented by the following general formula (a-1) and/or the following general formula (a-2), a dihydric phenol compound (B) represented by the following general formula (b-1) and/or (b-2) and/or water (C) and a basic compound (D) in an aprotic polar solvent:

[Chemical formulae 1]

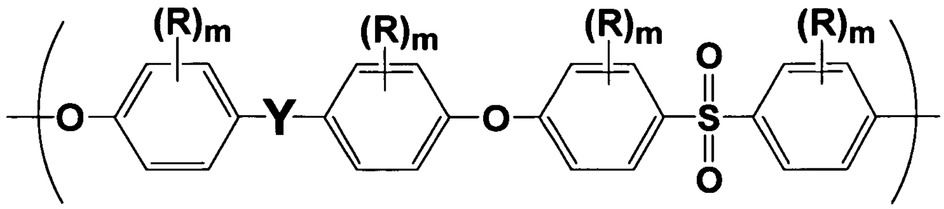

(a-1)

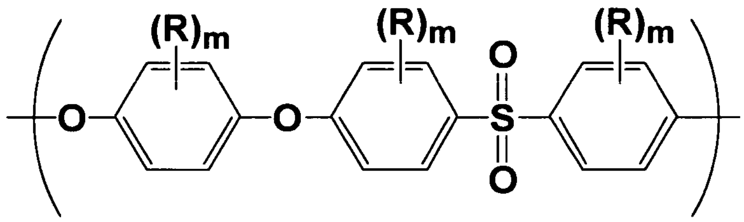

(a-2)

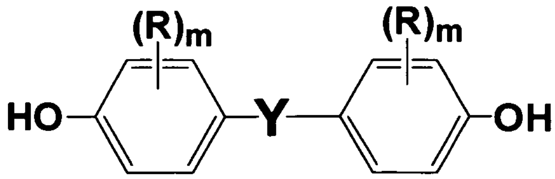

(b-1)

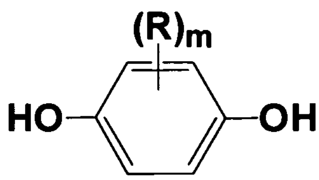

(b-2)

where each R, which may be either the same as or different from other R's denotes, respectively independently, any one selected from alkyl groups with 1 to 6 carbon atoms and aryl groups with 6 to 8 carbon atoms; m denotes an integer of 0 to 3; Y denotes any one selected from direct bond, O, S, $SO_2$ CO, $C(CH_3)_2$, CH $(CH_3)$ and $CH_2$.

**2.** A method for producing an aromatic polyethersulfone having hydroxyphenyl end groups (E) comprising the step (I) of heating an aromatic polyethersulfone (A), a dihydric phenol compound (B) and/or water (C) and a basic compound (D) in an aprotic polar solvent, the step (II) of mixing the solution obtained in the step (I) and a surfactant, to obtain a homogeneous solution or suspension, and the step (III) of adding a second solvent different from the aprotic polar solvent to the homogeneous solution or suspension obtained in the step (II), to precipitate aromatic polyethersulfone particles.

**3.** A method for producing an aromatic polyethersulfone having hydroxyphenyl end groups (E), according to claim 1 or 2, wherein the added amount of the dihydric phenol compound (B) is 0.01 to 0.5 mole per 1 mole of the aromatic polyethersulfone (A).

**4.** A method for producing an aromatic polyethersulfone having hydroxyphenyl end groups (E), according to any one of claims 1 through 3, wherein the added amount of water (C) is 0.1 to 30 moles per 1 mole of the aromatic polyethersulfone (A).

**5.** A method for producing an aromatic polyethersulfone having hydroxyphenyl end groups (E), according to any one of claims 1 through 4, wherein the basic compound (D) is at least one selected from sodium carbonate, potassium carbonate, anhydrous sodium carbonate and anhydrous potassium carbonate.

**6.** A method for producing an aromatic polyethersulfone having hydroxyphenyl end groups (E), according to any one of claims 1 through 5, wherein the aprotic polar solvent is at least one selected from N-methylpyrrolidone, N,N-dimethylformamide, N,N-dimethylacetamide, 1,3-dimethyl-2-imidazolidinone, dimethyl sulfoxide and sulfolane.

**7.** A method for producing an aromatic polyethersulfone having hydroxyphenyl end groups (E), according to any one of claims 1 through 6, wherein the heating temperature is 100 to 200˚C.

**8.** A method for producing an aromatic polyethersulfone having hydroxyphenyl end groups (E), according to any one of claims 1 through 7, wherein the aromatic polyethersulfone (E) obtained by heating the aromatic polyethersulfone (A), the dihydric phenol compound (B) and/or water (C) and the basic compound (D) in an aprotic polar solvent, and an acid are brought into contact with each other.

**9.** A method for producing an aromatic polyethersulfone having hydroxyphenyl end groups (E), according to any one of claims 2 through 8, wherein the surfactant is at least one or a mixture consisting of two or more selected from perfectly saponified or partially saponified polyvinyl alcohol, perfectly saponified or partially saponified poly(vinyl alcohol-ethylene) copolymer, polyethylene glycol and polyvinylpyrrolidone.

**10.** A method for producing an aromatic polyethersulfone having hydroxyphenyl end groups (E), according to any one of claims 2 through 9, wherein the added amount of the surfactant is 1 to 200 parts by mass per 100 parts by mass of the aromatic polyethersulfone (A).

**11.** A method for producing an aromatic polyethersulfone having hydroxyphenyl end groups (E), according to any one of claims 2 through 10, wherein the second solvent is such that the solubility of the aromatic polyethersulfone (A) in the second solvent at 25˚C is 1 mass% or less.

**12.** A method for producing an aromatic polyethersulfone having hydroxyphenyl end groups (E), according to any one of claims 2 through 11, wherein the second solvent is at least one or a mixture consisting of two or more selected from water, methanol and ethanol.

**13.** A method for producing an aromatic polyethersulfone having hydroxyphenyl end groups (E), according to any one of claims 1 through 12, wherein the hydroxyphenyl end group rate of the aromatic polyethersulfone (A) used as the raw material is 50 mol% or less (measured by $^1$H-NMR in dimethyl sulfoxide-d6 and calculated from [Peak area at 6.9 ppm (hydroxylphenyl end group)]/[Peak area at 6.9 ppm (attributable to hydroxyphenyl end group) + Peak area at 7.7 ppm (attributable to chlorophenyl end group)] $\times$ 100).

**14.** A method for producing an aromatic polyethersulfone having hydroxyphenyl end groups (E), according to any one of claims 1 through 13, wherein the hydroxyphenyl end group rate of the obtained aromatic polyethersulfone having hydroxyphenyl end groups (E) is 60 mol% or more (measured by $^1$H-NMR in dimethyl sulfoxide-d6 and calculated from [Peak area at 6.9 ppm (hydroxylphenyl end group)]/[Peak area at 6.9 ppm (attributable to hydroxyphenyl end group) + Peak area at 7.7 ppm (attributable to chlorophenyl end group)] x 100).

**15.** A method for producing an aromatic polyethersulfone having hydroxyphenyl end groups (E), according to any one of claims 1 through 14, wherein the reduced viscosity of the obtained aromatic polyethersulfone having hydroxyphenyl end groups (E) measured in DMF at 25˚C and 1 g/dl is 0.2 to 0.4.

**16.** A method for producing an aromatic polyethersulfone having hydroxyphenyl end groups (E), according to claim 14, wherein the hydroxyphenyl end group rate of the obtained aromatic polyethersulfone having hydroxyphenyl end groups (E) is 80 mol% or more (measured by $^1$H-NMR in dimethyl sulfoxide-d6 and calculated from [Peak area at 6.9 ppm (hydroxylphenyl end group)]/[Peak area at 6.9 ppm (attributable to hydroxyphenyl end group) + Peak area at 7.7 ppm (attributable to chlorophenyl end group)] $\times$ 100).

**17.** A method for producing an aromatic polyethersulfone resin composition comprising the steps of kneading 1 to 100 parts by mass of the aromatic polyethersulfone having hydroxyphenyl end groups (E) as set forth in any one of said claims 1 through 16 with 100 parts by mass of an epoxy resin and heating the mixture at 100˚C to 200˚C for curing.

**18.** An aromatic polyethersulfone having hydroxyphenyl end groups represented by the following chemical structural formula (a-3) and having a hydroxyphenyl end group rate of 60 mol% or more (measured by $^1$H-NMR in dimethyl sulfoxide-d6 and calculated from [Peak area at 6. 9 ppm (hydroxylphenyl end group) ] / [Peak area at 6. 9 ppm

(attributable to hydroxyphenyl end group) + Peak area at 7.7 ppm (attributable to chlorophenyl end group)] ] × 100) and a reduced viscosity of 0.2 to 0.4 as measured in DMF at 25°C and 1 g/dl.

[Chemical formula 2]

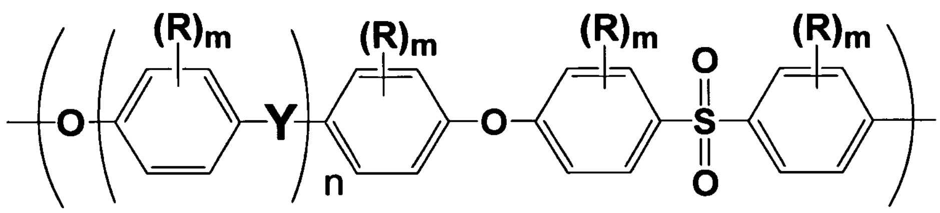

(a-3)

where each R, which may be either the same as or different from other R's denotes, respectively independently, any one selected from alkyl groups with 1 to 6 carbon atoms and aryl groups with 6 to 8 carbon atoms; n denotes an integer of 0 to 1; m denotes an integer of 0 to 3; Y denotes any one selected from direct bond, O, S, $5O_2$, CO, $C(CH_3)_2$, $CH(CH_3)$ and $CH_2$.

**19.** Particles of an aromatic polyethersulfone having hydroxyphenyl end groups with an average particle size of 0.1 to 50 μm, obtained from the aromatic polyethersulfone having hydroxyphenyl end groups (E) as set forth in claim 18.

**20.** Particles of an aromatic polyethersulfone having hydroxyphenyl end groups as set forth in claim 19, wherein the particle size distribution is 1.0 to 1.5.

# Figure 1

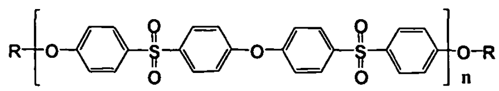

R= 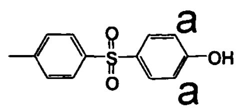

R= 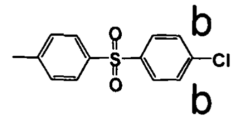

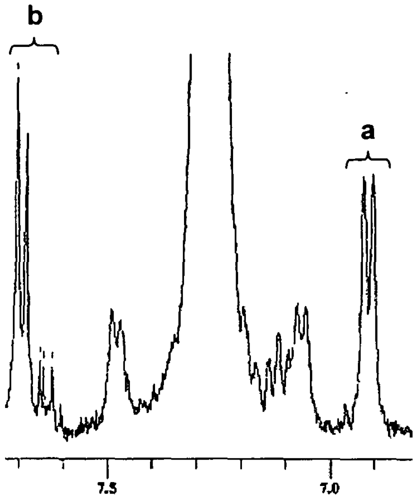


Reference Example 1
50% Hydroxyphenyl group

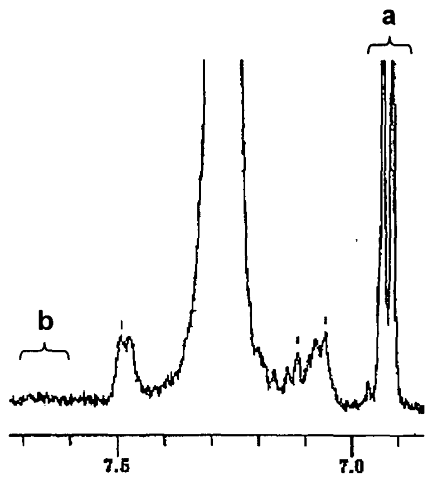


Example 21
100% Hydroxyphenyl group

# Figure 2

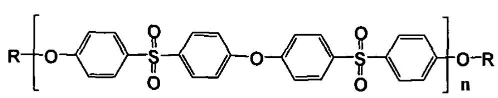

R= 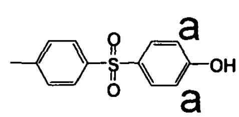

R= 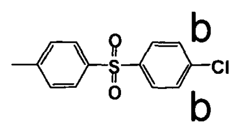

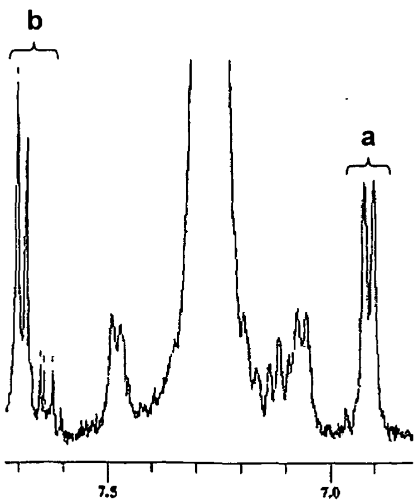


Reference Example 1
50% Hydroxyphenyl group

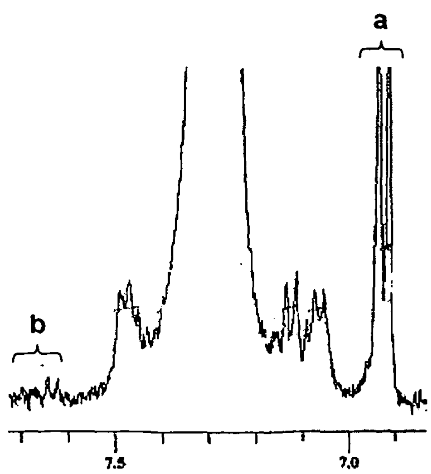


Example 48
92% Hydroxyphenyl group

Figure 3

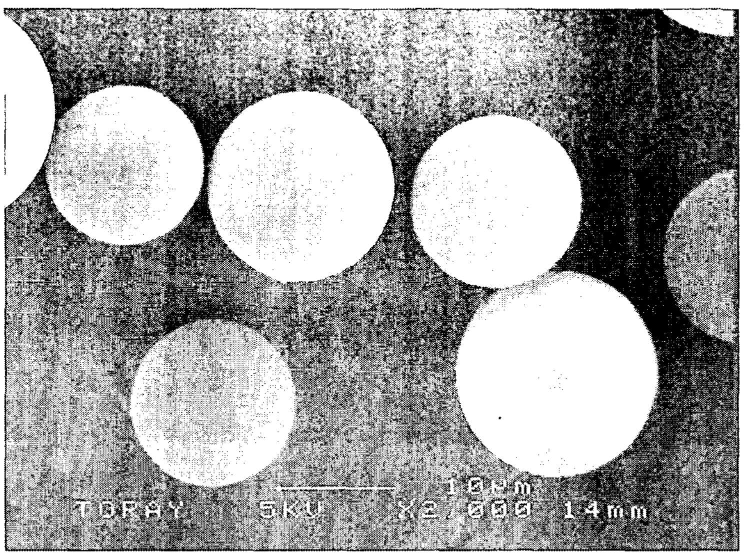

Figure 4

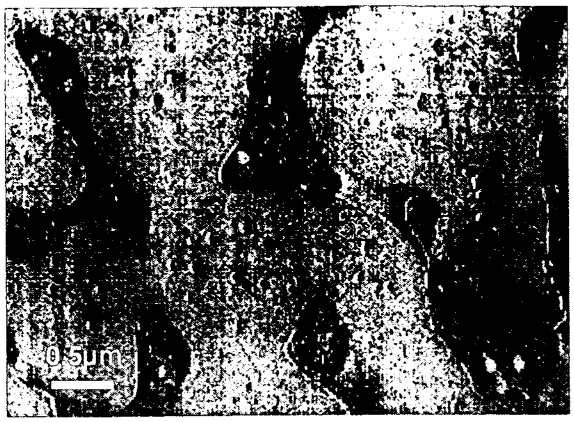


Figure 5

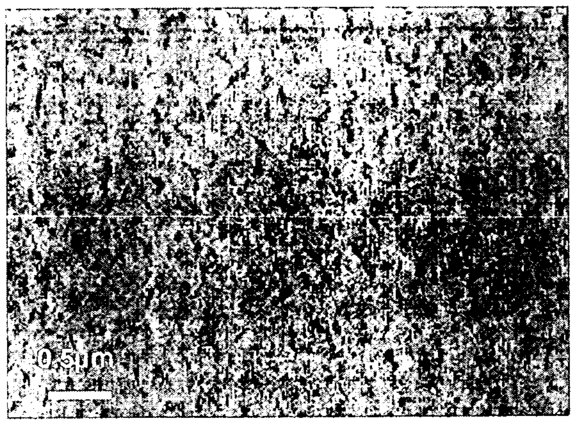


Figure 6

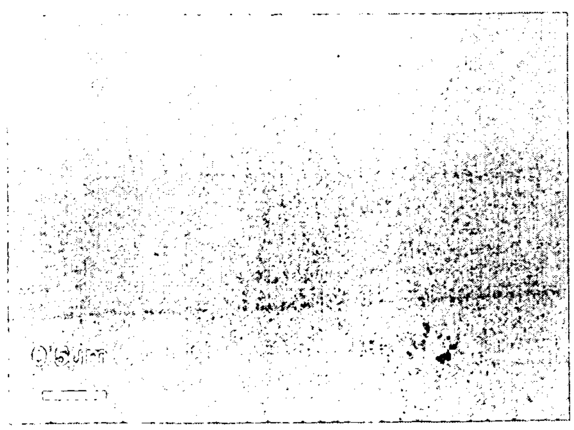

Figure 7

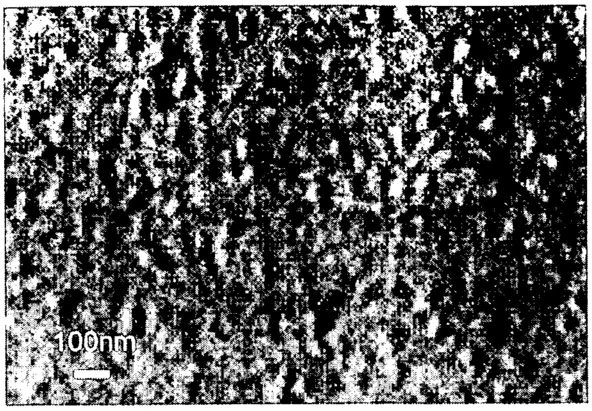


Figure 8

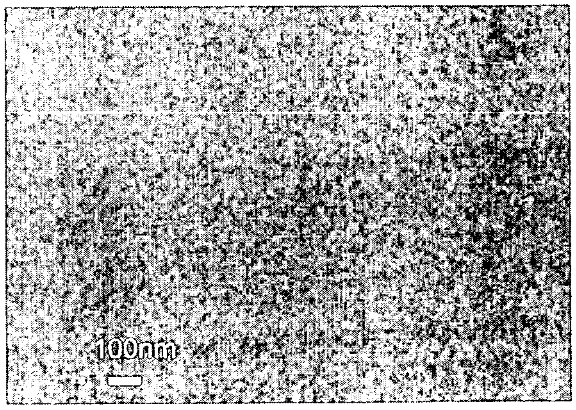

**INTERNATIONAL SEARCH REPORT**

International application No.
PCT/JP2008/064086

A. CLASSIFICATION OF SUBJECT MATTER
*C08G75/23*(2006.01)i

According to International Patent Classification (IPC) or to both national classification and IPC

B. FIELDS SEARCHED

Minimum documentation searched (classification system followed by classification symbols)
C08G75/00-75/32, C08G65/34-65/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 3-41120 A (Daicel Chemical Industries, Ltd.), 21 February, 1991 (21.02.91), Claims; page 3, lower left column, lines 5 to 6; examples & JP 2875550 B2 | 1-20 |
| X | JP 4-236223 A (CIBA-Geigy AG.), 25 August, 1992 (25.08.92), Claims; Par. No. [0031]; examples & CA 2045291 A1 & EP 467826 A2 | 18-20 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 02 September, 2008 (02.09.08) | 09 September, 2008 (09.09.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/064086

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-95863 A (Sumitomo Chemical Co., Ltd.), 04 April, 2000 (04.04.00), Claims; examples & BE 1012867 A3 & DE 19945896 A1 & GB 2341865 A & GB 2341865 B & KR 2000-0023434 A & US 6562935 B1 | 18-20 |
| A | JP 2004-263154 A (Sumitomo Chemical Co., Ltd.), 24 September, 2004 (24.09.04), Claims; examples (Family: none) | 1-20 |
| A | JP 2004-107606 A (Sumitomo Chemical Co., Ltd.), 08 April, 2004 (08.04.04), Claims; Par. Nos. [0001] to [0006]; examples & DE 10244628 A1 & US 2003/0114639 A1 & US 6828414 B2 | 1-20 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7011134 A
- JP 6228438 A
- JP 6157906 A
- JP 2001106921 A
- JP 2005105151 A
- JP 1118565 A
- JP 2058569 A
- JP 2007231234 A
- JP 2000080329 A
- JP 4325590 A
- JP 427799 B
- JP 4521318 B
- JP 48019700 A
- JP 53012991 A
- JP 53016098 A
- JP 5163352 A
- JP 5086186 A


### Non-patent literature cited in the description


- Kobunshi Kagaku Joron. Kagaku Dojin, 206